# DEMANDE DE BREVET EUROPEEN

(11) **EP 1 760 032 A2**
(43) Date de publication de la demande: **07.03.2007**
(21) Numéro de dépôt: 06370025.6
(22) Date de dépôt: 29.08.2006
(51) Int. Cl.: B66F 9/12, B62B 3/06

(54) **Dispositif de manutention horizontale et collective de palettes pour charger ou décharger des véhicules**

(30) Priorité: 30.08.2005 FR 0508842
(71) Demandeur: Le Roy, Yvon, 59940 Le Doulieu (FR); Sterin, Guillaume, 62145 Liettres (FR); Wattebled, Thomas, 62890 Tournehem (FR)
(72) Inventeur: Le Roy, Yvon, 59940 Le Doulieu (FR)

(57) **Abrégé**

Dispositif de manutention horizontale et collective de palettes pour charger ou décharger les véhicules.

L'invention concerne un dispositif capable de déplacer tout ou partie de la cargaison d'un véhicule, sous forme de palettes chargées en rangées, à partir d'un quai par un accès unique, en une seule opération. D'où un gain de temps précieux dans l'immobilisation du véhicule, des gains dans l'investissement et la main d'oeuvre associés à la manutention des palettes. L'appareil est constitué d'au moins une paire de liens flexibles (1), formant une chaîne composée de modules de levage et de déplacement (2) ou (34), de maillons de liaison (3), tous éléments s'adaptant en longueur aux formats de palette et aux écarts entre elles. Ces liens (1) sont pilotés par un engin mobile horizontalement quelque soit la direction.

## Description

La présente invention concerne un dispositif de manutention horizontale et collective de palettes pour charger ou décharger les véhicules routiers tels que camions, semi-remorques, fourgons, containers sur remorque, par leur accès arrière, sans limitation d'usage à ces seuls véhicules ou contenants.

La manutention des palettes pour le chargement et le déchargement des véhicules routiers se fait traditionnellement au niveau des entrepôts de regroupement, de stockage ou de distribution, à partir de quais d'accueil des véhicules, pour en sortir ou y entrer une grande quantité de palettes chargées, en nombre variable à l'intérieur, selon le format des palettes et leur orientation, ce qui représente un flux très important de palettes passant au niveau de ces quais, implantés également en nombre important, eux aussi, pour l'accueil des véhicules, notamment dans les structures logistiques professionnelles organisant la distribution de grands flux de denrées et de marchandises.

L'entrée ou la sortie du flux de palettes à partir de remorques, fourgons ou plates-formes bâchées ou entourées de cloisons rigides comme dans les transports frigorifiques, se fait traditionnellement pour la grande majorité de la flotte routière, par la porte arrière, unique accès possible si les cloisons sont inamovibles, au moyen de chariots élévateurs à fourches, ou de transpalettes, dont les différents modèles répondent à des exigences variées selon la charge, le format, la hauteur de gerbage, l'agencement des magasins de rangement de l'entrepôt, ces engins devant entrer eux-mêmes dans le camion, ce qui limite leur poids, leur encombrement.

L'une des caractéristiques communes à ces moyens est qu'ils ne peuvent prendre en charge au maximum qu'une à deux palettes à la fois, en hauteur, si la charge n'est pas trop importante ou une à deux en longueur ou une à trois en largeur, au maximum et non simultanément, à la condition que les fourches du chariot le permettent, ainsi que sa charge admissible en porte-à-faux et que le poids total en charge du chariot soit admissible pour les suspensions du véhicule à charger ou décharger.

Selon certaines formes de réalisation, par exemple selon le document US 3070248 ou le document US 3709394, des fourches télescopiques permettent de prendre plusieurs palettes. Ces fourches sont constituées de chaînes formées de maillons se bloquant en arc-boutement en position horizontale. Cependant leurs longueurs restent limitées par la charge à déplacer en porte-à-faux, elle-même limitée par la tenue des articulations des maillons en arc-boutement et par le poids et l'encombrement du chariot porteur à contrepoids. Dans ces deux exemples, la charge est soulevée par des fourches qui ne sont pas elles-mêmes en appui au sol, ce qui limite la charge et le nombre de palettes manipulables.

Le document GB 902898 propose une solution avec roues d'appui au sol et s'adapte seulement au format d'une seule palette. Certains transpalettes ont des roues d'appui au sol pour soulever la charge, mais les longueurs des fourches sont fixes et limitées à la longueur de deux palettes maximum.

Pour les charges longues sur palettes, ayant la longueur maximum d'une remorque de camion, la seule possibilité actuelle pour les charger ou décharger est de passer par le coté long de la remorque ce qui exige qu'elle puisse être accessible par le coté, après démontage de la bâche, des ridelles, voire des rehausses, ce qui exige du temps et de la main d'oeuvre. Si la porte arrière reste l'accès unique du véhicule, ce type de charge ne peut être chargé, sauf à utiliser des moyens spécifiques uniquement destinés à cet usage et non utilisable de manière intensive et générale pour des tâches plus courantes ou plus variées.

Charger une charge longue par l'arrière ou prendre davantage de palettes à la fois avec le même moyen relève de l'impossibilité avec les moyens traditionnels peu adaptés ou assez peu adaptatifs. A fortiori, il est impossible avec ces moyens existants les plus répandus de décharger ou de charger le chargement complet d'un véhicule par l'arrière en une seule opération.

Le dispositif selon l'invention permet de remédier à cet inconvénient majeur qui limite l'augmentation des flux de marchandises, obligeant pour les absorber, à la multiplication des quais, des chariots élévateurs ou des transpalettes, de la main d'oeuvre associée, par la durée importante des opérations de déchargement et chargement qui provoquent, outre une immobilisation longue des véhicules, une fréquente astreinte financière supplémentaire pesant sur les coûts.

Pour réduire ce temps et le nombre de ces équipements, lourds en investissement et en main d'oeuvre de fonctionnement, il apporte une solution capable d'une manutention unique simultanée de tout ou partie d'un chargement sous forme de palettes par l'arrière du véhicule, accès traditionnellement courant du chargement.

Selon une première caractéristique, il comporte en effet au moins une paire de liens flexibles (1), formant deux trains d'éléments s'étendant horizontalement en chaîne et en lignes parallèles, destinés au levage vertical et au déplacement d'un chargement constitué d'au moins une rangée de palettes alignées, comprenant chacun, d'une part au moins deux ensembles modulaires (2) de levage vertical et de déplacement, équipés chacun pour cela de moyens propres de levage (4) par appui au sol, de format variable adapté au format utilisé de longueur horizontale de palette, équipés chacun pour cela de moyens propres d'expansion (7), et articulés entre eux d'autre part au moyen d'au moins un autre élément (3), dit maillon de liaison, de longueur horizontale également variable, adaptée à l'écartement voulu entre palettes, doté pour cela d'un moyen propre de réglage de longueur, l'ensemble formant un train d'éléments articulés, au moyen duquel on lève simultanément et on déplace simultanément d'une seule masse les palettes ordonnées du chargement, après introduction de ces liens (1) sous le chargement, se déplaçant au sol suivant une direction ajustable au moyen d'éléments directionnels (15), de type câble, agissant par tension collectivement sur tous les éléments d'un même lien (1) pour corriger la direction prise par l'extrémité libre, les dits liens pénétrant par les orifices prévus dans les palettes destinés traditionnellement à l'engagement des fourches de chariots élévateurs ou des transpalettes, au moyen du déplacement dans la même direction du véhicule tracteur ou pousseur, dit tracteur (13), porteur et positionneur de ces liens flexibles de manutention (1), selon la quantité présélectionnée et ordonnée de palettes devant entrer ou sortir par l'accès unique du véhicule recevant le chargement.

Le chargement étant constitué de palettes de format variable selon les usages, mais homogène pour le transport et le traitement des flux, il est nécessaire de positionner le dispositif de manutention afin que la charge de chacune des palettes soit levée individuellement de manière indépendante, pour éviter des interactions entre palettes, même si toutes les palettes sont levées ensemble simultanément et qu'elles soient ensuite déplacées ensemble comme une seule masse. Il faut donc que le moyen pour lever verticalement et déplacer les palettes puisse s'adapter au format des palettes.

Or les plus utilisées sur le marché de la logistique sont de format 800 x 1200 millimètres et de format hybride 1000 x 1200 millimètres. Bien que le principe de l'appareil puisse convenir à d'autres formats, le dispositif a été au moins conçu dans son premier dimensionnement, pour traiter les chargements majoritairement organisés au moins à partir de ces deux formats, partant qu'ils sont généralement en quantité homogène dans chaque format emplissant une remorque, dont les dimensions courantes intérieures minimum sont de 2400 millimètres de largeur et de 13,200 mètres de long, sans limitation à ces dimensions, pouvant recevoir un chargement selon une première disposition homogène de palettes, en 3 fois 800 millimètres en largeur et de 11 fois 1200 millimètres en longueur, ce qui représente au maximum 33 palettes sur plateau, et qui entraîne le réglage des modules (2) de levage et de déplacement à la longueur de 1200 millimètres.

Plus rarement, les palettes de 800 x 1200 sont placées de telle manière que leur longueur se trouve dans la largeur du véhicule, constituant un chargement en 2 fois 1200 dans la largeur du plateau du véhicule et 16 fois 800 millimètres dans la longueur, soit au maximum 32 palettes. Cette disposition est moins probable car on perd la place d'une palette. Elle demanderait un réglage du module (2) à 800 millimètres.

Selon une seconde disposition également homogène, des palettes hybrides sont placées en 2 fois 1200, dans la largeur du plateau du véhicule et 13 fois 1000 millimètres dans la longueur du même plateau, soit au maximum 26 palettes de ce format, ce qui entraîne le réglage des modules porteurs (2) à la longueur de 1000 millimètres.

Naturellement, si le format de palette de 1200 x 1200 venait à être utilisé, en remplissant un véhicule de 22 palettes à ce format, l'appareil pourrait parfaitement lui convenir sans aucune adaptation supplémentaire. Par ces exemples, l'usage majoritaire d'au moins deux ou trois formats de palette démontre la nécessité d'une variation de la longueur du module (2) de levage et de déplacement.

Le document GB 902898 décrit déjà un dispositif capable de se modifier en longueur pour s'adapter au format de la palette, cependant il ne semble pouvoir soulever qu'une palette et non plusieurs. Son système de levage unique n'est pas disposé sous la palette, en plusieurs éléments porteurs en appui au sol, ce qui limite la possibilité de prise en charge de plusieurs palettes simultanément.

Les modules (2) de levage et de déplacement, composant les liens flexibles de manutention (1) doivent pouvoir également s'adapter au format des palettes, mais surtout permettre d'en prendre plusieurs simultanément en plaçant les appuis au sol pour le levage, de la manière la plus judicieuse par rapport à la charge, notamment en faisant varier la distance entre les appuis si le format varie.

Selon des modes particuliers de réalisation, selon une seconde caractéristique, le dispositif comporte à cet effet, pour chaque lien flexible (1), au moins deux modules (2) de levage vertical et de déplacement comprenant chacun au moins deux éléments porteurs (4) de levage, équipés chacun d'au moins un moyen (36) de déplacement et d'appui au sol, reliés entre eux par au moins un élément de structure portante intermédiaire (5) et, aux extrémités des dits modules (2), au moins un élément de structure portante d'extrémité (6), tous éléments (5) et (6) coulissant horizontalement sur les dits éléments porteurs de levage (4), pour répartir en longueur, la position des moyens de déplacement et d'appui au sol (36), et adapter le format du module (2) au format de longueur horizontale des palettes à manipuler.

Cette longueur varie selon la longueur du format de la palette à soulever et doit rester limitée à cette longueur, sans débordement hors de la zone d'entreposage occupée par celle-ci, ce qui est indispensable à l'intérieur d'un véhicule, délimité par des cloisons.

Sur les palettes courantes, les traverses d'appui sont réparties dans la largeur, en commençant par une traverse aux deux extrémités. Il faut donc que les appuis au sol du dispositif puissent s'intercaler entre ces traverses.

Dans le document GB 902898, l'appui au sol du système de levage peut justement rencontrer une traverse d'appui, puisqu'il est situé en extrémité du dispositif, de part sa conception. A moins de faire déborder l'extrémité d'appui, ce qui peut poser problème, pour une palette posée contre une cloison.

Ainsi, dans le cas d'une palette à manipuler dans sa largeur, les liens (1) étant introduits perpendiculairement à la direction des traverses, les dessus des modules (2) de levage et de déplacement doivent prendre appui sous le plancher de palette, en évitant notamment que les appuis principaux au sol (36) des éléments de levage (4), ne se placent malencontreusement sur les traverses des palettes qui servent d'appui au sol lors de l'entreposage, ou soient placés en dehors de la zone de répartition de charge sous la palette elle-même, ce qui serait le cas si le dispositif débordait de la palette. Il est donc nécessaire que les appuis (36) des modules (2) soient toujours disposés sous la palette entre les traverses et bien répartis sous celle-ci.

Pour toutes ces considérations, selon une troisième caractéristique, chaque module (2) de levage et de déplacement comprend au moins un moyen (7) d'expansion horizontale et longitudinale du module (2), qui, en agissant sur les écartements entre les éléments de levage (4), déplace le moyen de déplacement et d'appui au sol (36) de ces dits éléments (4), plaçant ceux-ci au milieu de chaque fraction égale de la longueur totale de la palette, obtenue par division de cette longueur par le nombre d'éléments (4) contenus dans le module (2), fraction affectée à chacun des éléments (4), pour équipartition de la charge sur tous les moyens de déplacement et d'appui au sol (36).

En effet, pour chaque module (2) dont la longueur doit être réglée égale à celle des palettes utilisées, chaque fraction égale de cette longueur doit recevoir un élément de levage (4) avec, en son milieu, un moyen d'appui au sol et de déplacement (36).

Les intervalles entre ces éléments (4) reçoivent des éléments porteurs intermédiaires coulissants (5), tandis que les extrémités du module (2) reçoivent des éléments porteurs coulissants d'extrémité (6). Ceux-ci devant se placer au mieux, tant pour la longueur du module (2), que pour la répartition de la charge devant être réalisée équitablement, il faut recourir à un moyen complémentaire de positionnement longitudinal de ces éléments d'extrémité (6), qui ne doivent pas rester libres de leur position.

Selon une quatrième caractéristique, dans le but d'ajuster le réglage du format du module (2) égal à celui de la palette, notamment au niveau de la longueur totale du module conférée par le positionnement des éléments d'extrémité (6), le moyen (7) d'expansion horizontale et longitudinale du module (2), en agissant sur la course d'écartement entre les éléments de levage (4), agit simultanément sur la course d'écartement des éléments de structure portante d'extrémité (6), notamment en doublant pour ceux-ci, la course d'écartement obtenue entre éléments (4), au moyen d'un mécanisme supporté par les dits éléments (4), relayant et amplifiant le mouvement entre le moyen d'expansion (7) et les éléments (4), permettant ainsi par la commande unique des moyens d'expansion (7) agissant individuellement ou collectivement, la mise au format de tous les modules (2), selon le format utilisé de palette et assurant l'équipartition de la charge sur les appuis au sol des éléments (4), disposés au milieu des fractions égales de la longueur du format.

Dans le cas d'un module (2) divisé en deux fractions égales de longueur, par la présence de deux éléments (4) de levage, reliés par un élément portant intermédiaire (5), on peut utiliser le mouvement donné par le moyen d'expansion (7), au centre du module (2), écartant symétriquement les éléments (4), en reprenant ce mouvement par un mécanisme adapté au déplacement des extrémités (6), doublant la course d'écartement A des éléments (4) pour la course d'écartement B entre extrémités (6), par rapport au centre du module (2), grâce au relais par le mécanisme complémentaire, de la commande de déplacement des éléments (4). La mise au format en longueur de chaque module ne sera alors commandée que par un seul moyen central d'expansion (7) dans le cas d'un module (2) à deux éléments porteurs (4), ou dans un cas plus général, par des moyens (7) en quantité égale au nombre d'éléments d'intervalles portants (5), seuls les éléments (4) aux extrémités du module (2) recevant chacun, un mécanisme complémentaire de commande des éléments d'extrémité (6), à partir des moyens (7) les plus proches des extrémités du module (2).

Pour répondre au besoin de découplage mécanique entre palettes lors d'un déplacement collectif ou même lors du levage des palettes, les liens flexibles de manutention (1) qui s'engagent sous les palettes, doivent comporter des liaisons filtrant les interactions possibles entre palettes, pour éviter tout dommage, notamment lié à des collisions entre palettes pouvant être provoquées par un mauvais état du sol ou par le passage du quai au plancher du véhicule ou même par un levage non parfaitement synchronisé des palettes.

A cet effet, selon une cinquième caractéristique, le maillon de liaison (3) entre les modules (2) comprend au moins deux articulations (8) d'axe horizontal au moins perpendiculaire à la direction générale d'un train de modules (2), fixées aux extrémités de ces modules (2), permettant aux dits modules, lors de leur déplacement et de leur levage, des mouvements libres et indépendants de découplage mécanique, acceptant les écarts relatifs de niveau vertical et d'inclinaison des palettes, par rapport au plan horizontal, suivant au moins deux degrés de liberté, dont au moins une rotation autour d'un des axes horizontaux et au moins une translation curviligne dans un plan vertical perpendiculaire à au moins un des axes horizontaux.

Ces mouvements libres relativement et indépendamment les uns des autres, lors des transferts de chargement entre le quai et le véhicule, sont nécessaires eu égard aux défauts relatifs de positionnement du quai par rapport au plancher du véhicule, compte tenu de sa suspension, alourdie ou allégée selon l'opération en cours, susceptible de causer un écart variable en hauteur ou en aplomb, compte tenu également de la pente d'accès au quai, de l'angle entre le quai et la plate-forme, tous défauts obligeant traditionnellement pour les manoeuvres de manutention des palettes à l'emploi complémentaire de plans mobiles d'accès au véhicule, en appui sur celui-ci, à partir du quai, tous moyens existants qu'utiliserait naturellement le nouveau dispositif, selon cette cinquième caractéristique.

Ces maillons de liaison (3) articulés, intercalés entre les modules (2) de levage et de déplacement, les rendent notablement indépendants dans leurs fonctions de portage, de manutention.

Ils permettent en effet, après formatage des modules (2), de leurs appuis, l'introduction des liens (1) et le levage simultané, mais indépendant de chaque palette, le déplacement de celles-ci dans le respect du mouvement contrôlé de translation collective du train de palettes, en traction ou poussage, en autorisant également les autres mouvements libres souhaités de découplage mécanique, visant à ne pas transmettre l'influence des charges verticales d'une palette sur ses voisines, mouvements de translation verticale ou de léger basculement contrôlé par les appuis, liés à l'inertie de chaque palette chargée, en évitant notamment qu'un module (2) de levage et de déplacement ne soit à cheval sur deux palettes différentes, ce qui pourrait provoquer l'endommagement des palettes et de leur charge pendant le déplacement, situation qui pourrait être le résultat d'un mauvais positionnement d'un module (2) malgré sa mise au format des palettes, à cause d'un écart non maîtrisé entre palettes.

Pour apporter une solution à cette situation, selon une sixième caractéristique, le maillon (3) de liaison entre les modules (2) de levage vertical et de déplacement comprend au moins deux pièces (9), articulées chacune sur l'un des modules (2), coulissant sur une glissière centrale (10), permettant de régler la distance entre les articulations au moyen d'un actionneur (11), prenant appui sur une glissière centrale (10), pour régler l'écart longitudinal entre deux modules (2) consécutifs, pour les positionner sous les palettes dans le but d'éviter leur mauvais positionnement et pour rapprocher les palettes qu'ils soulèvent, si nécessaire jusqu'au contact, lors d'un poussage du chargement par le tracteur (13), ou à l'inverse lors de la traction par le même tracteur (13), pour contrôler leur espacement, afin d'éviter les collisions entre palettes et faciliter leur manoeuvre de séparation.

Les maillons de liaison (3), articulés et intercalés entre les modules porteurs (2) de longueur variable selon format, sont donc eux-mêmes extensibles grâce à l'actionneur (11) de réglage de leur propre longueur, utilisable à vide ou lorsque que les palettes sont chargées sur les modules porteurs (2), ce qui permet d'espacer ou de rapprocher les palettes dans les opérations de chargement ou déchargement, selon les difficultés rencontrées dans ces opérations.

Au chargement, après levage collectif des palettes, le rapprochement de celles-ci sur le quai, par le moyen (11) permet un poussage du chargement dans le véhicule avec une cohésion plus homogène en comportement du train de palettes, notamment pour les resserrer dans le véhicule, à la fin du chargement. Au déchargement, pendant la traction du train de palettes, on peut autoriser progressivement la séparation des palettes pour faciliter leur extraction du véhicule.

La commande de raccourcissement des maillons de liaison (3) entre modules porteurs (2) peut être simultanée, au besoin, pour tous les maillons d'un même lien (1), quand il s'agit de les rapprocher, mais l'allongement de chacun de ces maillons (3) peut rester libre et progressif s'il n'est pas commandé, par exemple, lors de la traction sur les dits liens (1).

Cependant, il va de soi que les modifications de longueur de maillon doivent être effectuées de manière identique pour la paire de liens (1) installées sous une même rangée de palettes. On notera qu'une très légère variation de commande d'extension ou de rapprochement entre les deux liens (1) d'une même rangée de palettes, peut permettre d'infléchir la trajectoire de déplacement de la rangée, à droite ou à gauche du mouvement théoriquement rectiligne.

Cela pourra être mis à profit pour diriger le chargement lors des opérations de transfert entre le véhicule et le quai.

Dans les transpalettes d'usage courant, le levage des palettes pour permettre leur déplacement sur roues ou roulettes se fait traditionnellement par un mécanisme à leviers et commande hydraulique distante déplacée à l'extérieur de la palette sous le manche de direction pour les appareils manuels, dans la partie principale pour les chariots électriques ou à moteur. Pour les chariots à fourche, le levage de la charge est assuré par des fourches engagées sous les palettes et montées sur des guides verticaux mus par différents moyens motorisés, vérins ou chaînes, la charge sur les fourches étant complètement en porte-à-faux, ce qui exige un engin lourd et équilibré par contrepoids, pour recentrer le centre de gravité de l'engin dans le polygone de ses appuis au sol.

Tous ces moyens sont traditionnellement limités en charge et en encombrement horizontal, à cause de leur caractéristiques d'encombrement et de poids s'ajoutant à celles des palettes, situation qui peut trouver une solution moins encombrante et de poids propre plus faible si les appuis au sol se trouvent exclusivement sous les palettes.

Dans cet objectif, selon une septième caractéristique, l'élément (4), dit élément porteur de levage équipant les modules (2) de levage vertical et de déplacement, comprend au moins deux poutres horizontales, de direction commune suivant la longueur de l'élément porteur (4), l'une, poutre inférieure (18), base de la structure de l'élément porteur (4) et l'autre, poutre supérieure (19), dessus de la structure de l'élément porteur (4), dont l'écart vertical par rapport à la poutre inférieure (18) varie au moyen d'au moins un actionneur (28) compris dans l'espace entre poutres, protégé par celles-ci, prenant ses appuis sur elles et dont la course, reprise au moyen d'au moins un levier (20) articulé par des liaisons articulaires (21) et (22) coulissant horizontalement respectivement sur les poutres supérieure (19) et inférieure (18), provoque le déplacement vertical amplifié, conjugué et opposé en sens, d'un moyen (36) d'appui au sol et de déplacement, réglant et contrôlant la hauteur totale entre les appuis au sol et le dessus de la poutre supérieure (19), entre un minimum pour position basse dans l'introduction du lien flexible (1) sous les palettes, et un maximum pour position haute, pour les soulever sur les appuis du moyen de déplacement (36).

Selon cette septième caractéristique du dispositif, le levage des charges en palettes peut se faire de manière simultanée et identique par une seule commande au moins pour un module (2), sinon au moins pour chaque rangée de palette ou même et si on le souhaite, pour la totalité d'un chargement, à l'aide des trains de modules (2) des liens (1) pour chaque rangée de palettes du chargement, au moyen des actionneurs (28) à fluide sous pression, installés dans les éléments porteurs (4) des modules (2), recevant pour le levage, à partir d'une même canalisation d'arrivée, le fluide sous pression, et pour la descente des palettes, en complément de l'action de la gravité, par aspiration du fluide à partir de cette même canalisation, ou éventuellement, dans le cas d'actionneurs double effet, à partir d'une autre canalisation, reliant comme la première, tous les actionneurs (28) d'un même lien (1).

Afin que le levage soit homogène en hauteur et en comportement pour l'ensemble des modules portant les palettes, il faut que les actionneurs (28) agissent à l'intérieur d'un mécanisme d'équilibrage des forces, garantissant pour les palettes la levée parallèle au sol et la même course verticale.

Dans ce but, selon une huitième caractéristique, les deux poutres horizontales de chaque élément porteur de levage (4), l'une, poutre inférieure (18) et l'autre, poutre supérieure (19) sont maintenues parallèles dans leur déplacement relatif, au moyen d'au moins deux leviers (20), placés dans une disposition symétrique par rapport au plan médian de l'élément porteur (4) selon sa longueur, d'une part liés de chaque coté de ce plan médian par des liaisons articulaires (22) et (21), elles-mêmes installées dans des positions symétriques par rapport au même plan médian et coulissant horizontalement respectivement sur les poutres (18) et (19), puis d'autre part articulés entre eux par une extrémité commune au moyen d'un axe d'articulation qui se déplace dans le même plan vertical médian de la longueur de l'élément porteur (4), axe qui commande solidairement le déplacement de l'axe propre de l'articulation du moyen (36) de déplacement et d'appui au sol, placé également dans le même plan médian de l'élément porteur (4), leviers (20) dont les mouvements ainsi guidés symétriquement par rapport au plan médian de l'élément porteur (4), obligent les liaisons articulaires (21) et (22) à maintenir les poutres (19) et (18) parallèles, lors du fonctionnement des actionneurs (28).

En actionnant pour le levage, ce mécanisme démultipliant la course par le rapport de leviers entre liaisons d'appuis (22), (21) sur les poutres (18) et (19), ce mécanisme conservant lui-même, par sa constitution de leviers et de guidages symétriques, la symétrie et le parallélisme du levage, les actionneurs (28) obtiennent un levage parallèle aux surfaces d'appui d'un même élément porteur (4), indépendamment des variations de comportement ou des charges sur les dits actionneurs ou l'élément (4).

Ce même choix de mécanisme équilibre la répartition de la charge par rapport aux appuis, ceux-ci étant de fait toujours répartis correctement à l'intérieur d'un polygone de sustentation, grâce au positionnement obtenu par le formatage de la longueur des modules de levage et de déplacement (2), égal au format des palettes utilisées.

Pour faciliter le déplacement, il vaut mieux que le lien (1) soit de hauteur homogène, tant pour son introduction que pour le levage, chaque module (2) étant équipé d'au moins deux éléments porteurs (4), il est nécessaire que tous les éléments (4) d'un même groupe de modules (2) constituant les liens (1) aient la même course de levage, afin que la palette soulevée par deux liens (1) porteurs d'une même rangée, reste parallèle au sol. Les positions en hauteur des modules (2), donc des éléments (4) doivent être égales, tant pour la position basse que pour la position haute.

A cet effet, selon une neuvième caractéristique, la pièce (29), dite double coulisse, coulissant verticalement, d'une part dans la poutre supérieure (19) de l'élément porteur (4) dans une rainure centrée sur le plan médian vertical, et guidant verticalement d'autre part, par l'intérieur de l'élément porteur (4), un palier (39) de l'axe d'articulation du moyen de déplacement et d'appui (36), autorise le dit axe d'articulation du moyen (36), par son palier (39), à dépasser la limite de déplacement dans la rainure de la poutre supérieure (19), en se déplaçant elle-même dans cette rainure jusqu'à ses butées, permet par ses propres butées intérieures avec le palier (39) de l'axe d'articulation du moyen (36), de limiter la course de levage ou de descente de l'élément porteur (4) dans ses positions extrêmes par rapport à la poutre supérieure (19) et au palier (39).

Cependant lors de l'introduction des liens (1), dans l'espace prévu au niveau des palettes, il arrive que cet espace soit de hauteur variable, selon les variations dimensionnelles enregistrées sur les palettes, et que, selon l'orientation des traverses au sol, l'on ait à franchir l'obstacle de ces traverses en appui au sol, franchissement facilité par la garde au sol suffisante des modules (2) des liens (1).

Selon une solution courante, le moyen (36) de déplacement et d'appui du maillon de levage (4) autorise le franchissement des traverses d'appui des palettes, au moyen d'au moins deux appuis distants d'une valeur au moins supérieure à la largeur de l'obstacle à franchir et en permettant le soulèvement au moins de l'appui au contact de la traverse, au moyen d'au moins une articulation entre les deux appuis distants, sur le palier (39), également articulation du moyen (36) et articulation commune des leviers (20) transmettant la charge aux appuis, sans modification notable de la hauteur totale du module (2) pendant l'introduction des liens flexibles (1) sous les palettes.

Lors du chargement d'un véhicule, dans la poussée sur un même lien flexible (1), l'autre extrémité du lien (1) restant libre, on peut craindre à juste titre, malgré les précautions normales de réalisation, à cause des jeux naturels et nécessaires dans les articulations entre modules (2) et maillons (3), que certains modules (2) de levage et de déplacement ne dévient de la trajectoire rectiligne souhaitée, notamment ceux qui récoltent les effets des jeux angulaires cumulés des articulations, notamment ceux placés en tête de l'extrémité libre de chaque lien (1). Il pourrait s'en suivre que la rangée de palettes en cours d'introduction dans le véhicule pourrait dévier de sa trajectoire au lieu de s'introduire à l'emplacement choisi, dans l'alignement initialement prévu sur le plancher du véhicule.

Selon une dixième caractéristique, chaque lien flexible (1) comporte sur tout ou partie de sa longueur, au moins deux éléments directionnels (15), de type câble, de contrôle, d'allongement élastique faible, attachés au moins à l'extrémité libre du lien (1), disposés symétriquement de part et d'autre du plan moyen vertical et longitudinal d'un lien flexible (1), guidés le long du lien (1) par des gaines (16) solidaires des modules de levage (2), tendus entre les extrémités du lien (1), agissant par leur longueur et leur tension sur la rectitude et la rigidité du lien (1), agissant notamment sur la direction prise au sol par l'extrémité libre du lien (1), compte tenu des jeux articulaires présents dans les assemblages en chaîne, lors de ses déplacements commandés par le tracteur (13) porteur et positionneur de ces liens.

Pour contrôler la longueur et la tension de chacun des câbles d'un lien (1), il faut un dispositif capable de délivrer, retendre individuellement chacun des câbles d'un même lien (1), pour satisfaire aux exigences de son utilisation.

Selon une onzième caractéristique, les éléments directionnels (15), de type câble, de chaque lien flexible (1) sont réglés en longueur et en tension au moyen d'un appareil d'enroulement et de déroulement (17), situé à l'arrière des liens flexibles (1), du coté opposé à leur introduction, qui délivre ou tend chaque câble individuellement ou collectivement pour un lien (1) selon les besoins directionnels de l'extrémité libre du lien (1), du besoin en longueur totale de ce lien, notamment des besoins des moyens (7) d'expansion horizontale et longitudinale et des actionneurs (11), allongeant ou réduisant, en groupe ou individuellement, respectivement les longueurs des modules (2) de levage vertical et de déplacement et des maillons de liaison (3), en participant au contrôle du format des dits modules (2) dans l'adaptation de leur longueur au format de palettes, en collaboration avec le moyen (7) d'expansion horizontale et longitudinale des dits modules (2) indépendamment des autres maillons (3), en participant également au contrôle du format des maillons (3) de liaison, en collaboration avec l'actionneur (11) d'expansion longitudinale des dits maillons, indépendamment des autres modules (2), en participant au contrôle global de la longueur du lien flexible (1) dans son utilisation courante, notamment pour indiquer la longueur introduite sous une rangée de palettes et pour participer activement à la réduction totale de cette longueur lors du retrait des liens flexibles (1) dans une position de stockage.

Le principe de fonctionnement du moyen (17) de contrôle de longueur et de rectitude d'une chaîne, au travers des moyens de motorisation du mouvement des câbles, tient dans la comparaison des tensions, par la comparaison de l'effort fourni en couple et des longueurs délivrées, par la comparaison du codage angulaire des tambours, entre les deux câbles de faible allongement élastique, qui passent librement dans des gaines des éléments porteurs (4), disposés de part et d'autre des parois latérales de ces éléments, les protégeant ainsi des contacts.

Chaque câble (15) est relié d'une part à la première poutre (6) du premier module d'extrémité (34), en début de lien (1), et d'autre part, via l'autre extrémité du lien (1), à l'outillage porteur de chaque lien et son dispositif (17), enrouleur dérouleur à traction contrôlée des câbles, d'une part pour le contrôle des formats des modules (2), en collaboration avec l'ensemble des moyens (7), et d'autre part des maillons de liaison (3) en collaboration avec l'ensemble des moyens (11), indépendamment les uns des autres, par la longueur totale connue du lien (1), identique à celle du câble, pour orienter également l'extrémité de chaque lien (1) de manutention vers la droite ou la gauche, par la différence positive ou négative de tension entre câbles droit et gauche du lien (1), et cela, que les modules ou maillons extensibles soient allongés ou non, mais bloqués dans leur position par les moyens (7) et (11), au moins au moment du contrôle de direction.

Compte tenu de la longueur des contenants des véhicules recevant les chargements de 2 ou 3 rangées de 13 à 11 palettes, la longueur des liens (1) est au moins égale à la longueur d'une rangée complète de palettes. Pour régler leur format avant ou pendant l'introduction, il est nécessaire de prévoir une aire sur le quai où les modules (2) et les maillons (3) des liens (1) pourront être réglés en longueur. Cette opération est la première à effectuer lors d'un chargement ou un déchargement, l'aire en question permettant également la préparation ou la réception du chargement. Cependant, en dehors de cette opération, le stockage des longueurs de liens (1) et la réduction de leur encombrement se pose, notamment lors du déplacement de mise en position du tracteur (13) porteur des liens (1).

Selon une douzième caractéristique, le tracteur (13) porteur et positionneur des liens flexibles de manutention (1), chargé de contenir au moins l'ensemble des éléments d'un lien (1), d'en réduire l'encombrement de stockage, d'en guider le mouvement pour son introduction sous le chargement ou son retrait, comprend à cet effet au moins un magasin (14) de guidage et de rangement du lien (1), comportant une première roue (30) à au moins un flasque à jante de forme polygonale recevant, guidant et supportant les modules (2) de levage vertical et de déplacement et les maillons de liaison (3) du lien (1) dans une disposition circulaire compacte, installés dans cette roue (30) au moyen d'une autre roue (31) placée à l'intérieur de cette roue (30) et coaxiale à celle-ci, recevant et supportant, d'une part une chaîne de maillons (33) de liaisons mécanique et énergétique avec le lien flexible (1), de largeur horizontale plus faible que celle des modules (2) du lien (1) afin de passer librement dans la largeur de la roue (30) et d'autre part destinée à pousser le lien (1) contenu dans le magasin (14) hors de la roue (30), par rotation libre de celle-ci, en commandant sa propre rotation par un actionneur tournant autour de l'axe commun avec cette roue (30), une butée (32) stoppant la rotation libre de la roue (30) à la fin du vidage de celle-ci, libérant le lien (1) de cette roue dans sa sortie, ou à l'inverse, lors du mouvement de rentrée du lien (1), déclenchant la rotation de la roue (30), en tirant le lien (1) vers les butées (32) par la chaîne de maillons (33) au moyen de la roue (31), mise en rotation par son actionneur.

La disposition des palettes en nombre de rangées étant au moins de 2 ou 3 selon le format utilisé dans la largeur du véhicule, le dispositif doit comporter un outillage de positionnement des liens (1) lui permettant de positionner de manière indépendante, en face du bout de chaque rangée de palettes, pour introduction dans les passages prévus pour fourches, au moins une paire de liens flexibles (1) de manutention et correctement espacés pour y entrer, donc d'en régler l'écart transversal selon le format et la disposition d'implantation des palettes. Il est donc nécessaire de positionner les magasins (14) soit par paire, soit individuellement, par rapport au chargement, selon les palettes utilisées et le nombre de rangées à manipuler. Si ce nombre n'est que de deux au lieu de trois, il est alors nécessaire de ne pas déployer une des trois paires de liens (1). L'opérateur pourra prendre l'option de ne pas dérouler les liens (1) de certains magasins (14), notamment ceux qui sont ceux en limite des cotés du véhicule, de part et d'autre ou du même coté. De même, s'il s'agit de déplacer seulement une rangée unique de palette, seuls deux magasins (14) voisins seront activés.

Selon une treizième caractéristique, le tracteur (13) porteur et positionneur des liens de manutention (1), comprend au moins un support de magasins (35), chargé d'au moins un magasin (14) contenant le lien (1), chargé au plus d'une paire de magasins (14) et doté dans ce cas des moyens de réglage de l'écart transversal entre les deux magasins (14) supportés, selon la distance entre les orifices d'introduction d'une rangée de palettes pour le positionnement transversal de ces magasins (14) par rapport à la direction du chargement à manipuler, sinon doté dans l'autre occurrence au moins du moyen de son propre positionnement face aux rangées à manipuler, par rapport au véhicule support (13) et aux supports identiques voisins, chargés comme lui d'au moins un magasin (14).

Dans l'utilisation du dispositif de manutention, bien que l'ensemble dispose des moyens de positionnement des liens (1) face aux rangées de palettes à manipuler, il est nécessaire que le dispositif puisse se déplacer au complet, pour changer de quai de chargement ou plus simplement se positionner globalement face à un nouveau chargement arrivé ou à charger, les préparations de ces chargements pouvant se faire en temps masqué, en dehors de l'usage du dispositif de transfert, objet principal de cet texte. D'autre part, lors des opérations de chargement ou déchargement, l'opérateur utilisant le tracteur (13) devra placer et évaluer le positionnement correct des liens (1), par rapport au contenant receveur ou déjà porteur de la cargaison. Outre la possibilité de déplacement conférée au tracteur (13), il est aussi nécessaire de l'instrumenter par des caméras pointant l'avant et les cotés du chargement, pour guider l'opérateur, notamment lorsqu'il engage le chargement dans le contenant receveur ou lorsqu'il y engage les liens (1) à vide pour le décharger.

Selon une quatorzième caractéristique, le tracteur (13) porteur et positionneur des magasins (14) supportés par les éléments de positionnement transversal (35), dispose de moyens propres de déplacement à au moins trois degrés de liberté suivant un plan horizontal pour se positionner face à la cargaison, aidé en cela par au moins un capteur de vision pointant des références fixes, notamment celles du véhicule détenteur ou destinataire de la cargaison, de manière à disposer les liens (1) dans la position requise par la cargaison, en complément des positionnements relatifs obtenus par les supports de magasins (35) et des magasins (14) eux-mêmes, placés sur le véhicule support (13), notamment en privilégiant, parmi les choix possibles des degrés de liberté, la translation horizontale dans la direction utilisée pour le chargement ou déchargement de la cargaison, la translation horizontale dans la direction perpendiculaire à celle utilisée pour le chargement ou déchargement de la cargaison et, pour l'orientation des liens (1) du véhicule dans la direction de chargement, la rotation d'axe vertical, perpendiculaire au plan horizontal de chargement.

En ce qui concerne la prise en charge par les liens (1) de la cargaison elle-même, soit lorsqu'elle est dans le véhicule, lors d'un déchargement, soit lors de l'introduction de la cargaison dans le véhicule, se pose le problème du positionnement correct longitudinal des liens (1) sous les rangées de palettes, lors de leur introduction par l'opérateur.

Selon une quinzième caractéristique, le tracteur (13) porteur et positionneur des liens flexibles de manutention (1) comprend au moins un télémètre pointé horizontalement, dans la direction d'introduction des liens flexibles (1) et comporte sur ces liens flexibles (1), au moins sur un premier module d'extrémité (34), d'une part au bout de son extrémité (40), au moins un capteur de contact de proximité (41), détectant un obstacle frontal et, d'autre part, sur la première extrémité (40) et l'élément de structure portante d'extrémité (6) du dit module (34), au moins deux capteurs de détection de proximité (37), l'un pointant vers le coté, l'autre vers le sol et distants au plus de la longueur du premier module d'extrémité (34) et, pour les éléments suivants, d'une part sur les modules (2) de levage vertical et de déplacement du lien (1), au moins un capteur de détection de proximité (37) sur chaque pièce d'extrémité (6), à leurs extrémités et distants au plus de la longueur du module (2), et, d'autre part, au centre des maillons de liaison (3), un capteur (38) de détection de proximité, tous capteurs qui permettent à l'opérateur de détecter les bords ou les traverses de palettes, de calculer les écarts réels entre palettes pour régler les longueurs des dits éléments et de vérifier la non présence de palettes au dessus des maillons de liaison (3).

Le télémètre pourra donner à l'opérateur, lorsqu'il viendra prendre un chargement, la longueur du chargement par rapport au fond du véhicule.

Lors de l'introduction des liens (1) sous les rangées de palettes, le capteur de contact (41) est chargé de stopper l'avance du lien (1) et de son support (13), en cas d'obstacle - palette effondrée ou fond du véhicule atteint -, tandis que les capteurs de proximité (37) sur le coté ou le dessous de (6) détectent la présence des plots d'une palette ou d'une traverse, pour en localiser les bords.

Quand l'opérateur introduit un lien (1) sous une rangée de palette, le premier capteur (37) appartenant au premier module (34) détecte le bord de la première palette.

S'il poursuit sa progression, il lit les positions des traverses ou des palettes sous lesquelles passent le lien (1).

Le format des palettes peut être reconnu à partir de cette progression. En effet, il connaît la distance parcourue par le lien (1) entre les deux bords détectés et peut calculer l'intervalle entre les palettes. I1 peut procéder de la même manière pour les suivantes et mémoriser les écarts. Au final, lorsqu'il atteint le bout de la cargaison, après comparaison de la longueur détectée par le télémètre, avec la distance parcourue et les bords détectés, il connaît les écarts entre palettes et leurs positions dans la rangée, la position même des liens (1) par rapport au bout de la rangée, peut en régler la position globale, puis les maillons (3) de manière à faire coïncider les palettes et les modules porteurs, avant l'opérer le levage et le déplacement de l'ensemble. Une vérification instantanée est possible par l'examen de tous les capteurs (38) qui ne doivent pas détecter d'éléments de palette au dessus d'eux.

On peut objecter que l'opération consistant à entrer un chargement complet dans un véhicule pose le problème du resserrement des palettes et de leurs charges suivant la largeur du véhicule. D'où la solution courante d'introduire une à deux palettes à la fois. On a vu précédemment que les liens (1) étaient équipés de câbles (15) permettant d'infléchir la direction des modules d'extrémité (34), ce qui permet déjà de resserrer les palettes au moment de leur introduction. Mais il arrive que la charge sur les palettes déborde de celles-ci, notamment dans leur partie haute. Or ce débordement latéral peut gêner l'introduction de la cargaison dans le véhicule.

Selon une seizième caractéristique, dans un mode de réalisation particulier, le moyen (36) de déplacement et d'appui de l'élément porteur de levage (4), comporte un axe d'articulation (44), manoeuvrable en rotation par le coté de l'élément (4) grâce à une forme adaptée aux outils courants, présentant par rapport à l'un au moins de ses paliers (39) une excentration lui permettant de guider et placer les appuis au sol du moyen (36) dans deux positions stables distantes en hauteur de la valeur double de l'excentration, lors du levage des liens (1), positions dont l'usage différencié dans chacun des deux liens (1) manipulant une même rangée, permet d'incliner légèrement la rangée soulevée, dans un levage différent de l'un de ses cotés de manière que les charges de celle-ci, placées sur un bord de la cargaison à charger, ne constituent pas d'obstacles au passage des parois verticales du véhicule, en étant recentrées, notamment dans leur partie haute, par cette inclinaison.

Ce réglage peut être utilisé à profit, sur au moins un lien (1), pour les rangées de palettes en bordure de chargement, en surélevant ces palettes du coté extérieur, de manière à obliger leurs charges à s'incliner vers le plan médian longitudinal de tout le chargement. De même, la stabilité et la tenue en rigidité de la cargaison complète se trouvent renforcées par cette caractéristique.

Les dessins annexés illustrent l'invention :
PLANCHE 1/9 :

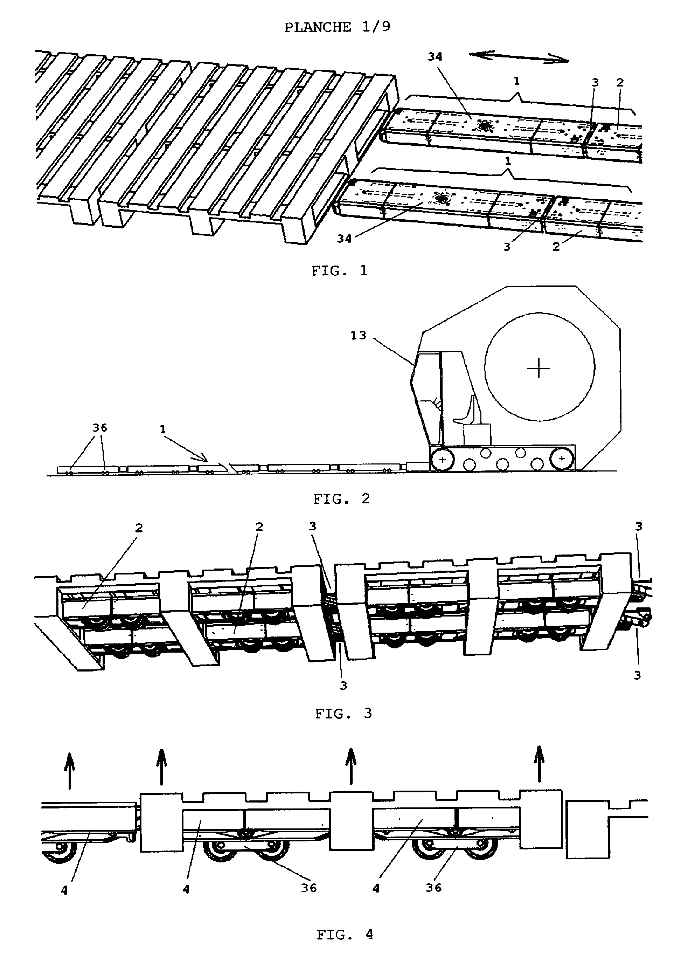

   La figure 1 représente en illustration de la première caractéristique, une vue partielle d'une paire de liens (1), dont leurs extrémités (34), les maillons (3) et les modules (2) du dispositif de manutention collective horizontale au coeur de l'invention, constitué au moins d'une paire de liens (1), à introduire sous une rangée partielle ou complète de palettes de même format, disposées de la même manière.
   La figure 2 représente une vue schématique du dispositif montrant le véhicule support (13) avec les liens (1) sommairement représentés, prêts se déplacer sur les moyens (36) dans l'introduction sous les palettes, pour compléter l'illustration de la première caractéristique.
   La figure 3 représente la partie de la chaîne de modules de levage et de déplacement (2) espacés par les maillons de liaison (3) de longueur réglable, en fonction de l'espace entre les palettes, pour illustration de la sixième caractéristique.

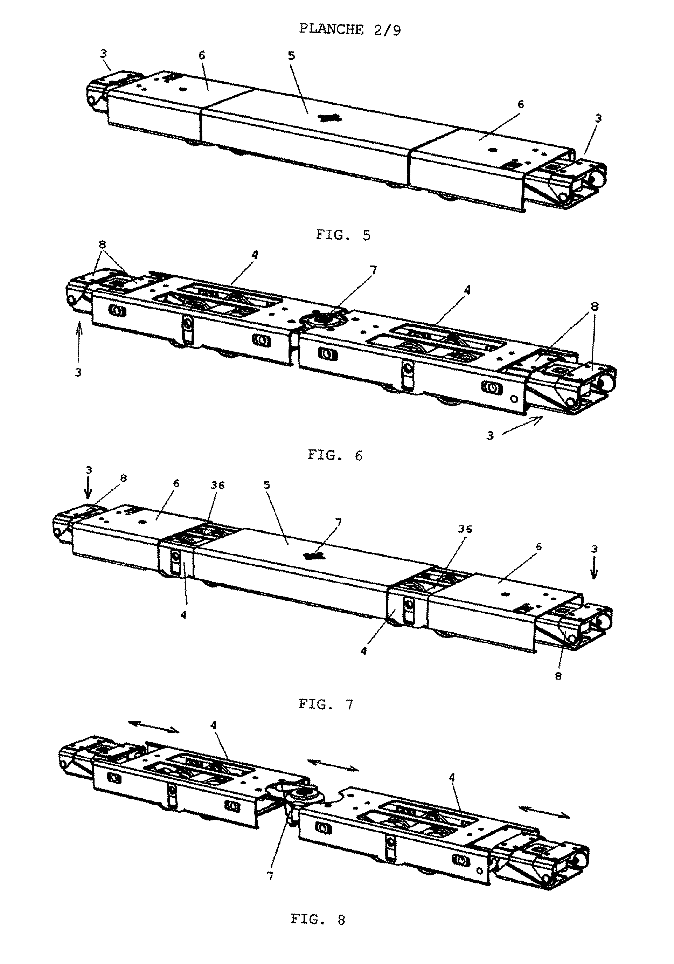

   La figure 4 représente la paire de liens (1) introduits, dans la position levage, avec les actionneurs des éléments de levage (4) activés. On note la course en hauteur de la palette soulevée par rapport à sa voisine, grâce aux roues du moyen (36) d'appui et de déplacement sur le sol, pour illustration de la septième caractéristique.
PLANCHE 2/9 :
   La figure 5 représente un module (2) de levage et de déplacement complet, précédé et suivi de maillons de liaison (3) articulés avec le module porteur (2). Le module de levage et de déplacement (2), représenté en position basse, est dans la configuration de longueur minimum, c'est-à-dire pour le format de palettes le plus court. Les poutres coulissantes (5) et (6) sont donc jointives. Le maillon de liaison (3) est en position de repli, c'est-à-dire pour des palettes mises bout à bout dans la rangée, pour illustration de la seconde caractéristique.
   La figure 6 représente le même module porteur complet que celui de la figure 5, dans lequel on a caché les trois éléments de poutres portantes (5) et (6) d'extrémité, coulissantes sur les éléments de levage (4) présents. On notera que les deux maillons de levage composant un module porteur, sont séparés par le dispositif central (7) d'expansion du module, actuellement en position de repli, dont le centre est fixé sur la poutre (5), non représentée. On notera qu'aux extrémités du module (2), les maillons de liaison (3), eux-mêmes en position de repli, sont fixés aux éléments de poutres coulissantes (6), non représentées dans cette figure, par les articulations (8) appartenant aux maillons (3), pour illustration de la troisième caractéristique.
   La figure 7 représente le même module porteur (2) complet, avec ses maillons de liaison (3) articulés, dans une autre configuration qu'à la figure 5. Toujours représenté en position basse, le module porteur est dans la configuration de longueur maximum, c'est-à-dire pour le format de palettes le plus long. Les poutres (5) et les extrêmes (6) sont écartées au maximum, par le moyen (7). Le maillon de liaison (3) est en position de repli, pour des palettes mises bout à bout dans la rangée. Les moyens d'appui (36) sont logés dans les éléments de levage (4), pour compléter l'illustration de la troisième caractéristique.
   La figure 8 représente le même module porteur complet dans l'état de la figure 7, figure dans laquelle on a caché les trois éléments de poutres portantes, coulissantes (5) et les deux (6). On notera également que le dispositif central d'expansion (7) a commandé simultanément l'allongement du module porteur (2) à la dimension désirée, mais aussi l'écartement des éléments de levage (4), afin que les moyens (36) soient en appui au sol entre les traverses des palettes, au quart et aux trois-quarts de la longueur choisie, pour compléter l'illustration de la troisième et quatrième caractéristique.
PLANCHE 3/9 :

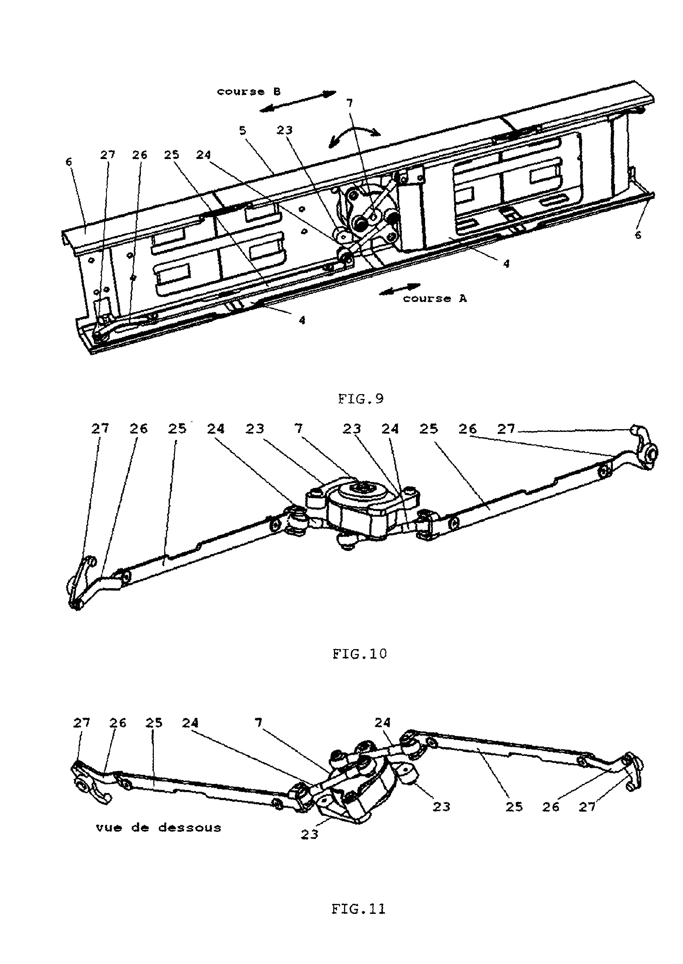

   La figure 9 représente partiellement le module (2), où l'on n'a laissé en pièces présentes que celles utiles à la compréhension du fonctionnement du mécanisme d'expansion (7). Celui-ci, par rotation, commande par les biellettes (23) l'écartement des maillons de levage (4), vus partiellement, et deux mécanismes relais, formés par les pièces (24), (25), (26), (27) qui commandent les translations des pièces d'extrémité (6), de manière que la course d'écartement B entre les éléments d'extrémité (6) soit le double de la course d'écartement A entre les maillons de levage (4), pour illustration de la quatrième caractéristique.
   La figure 10 représente la double chaîne cinématique formée pour moitié, d'une part par la biellette (23) pour commander le translation de (4), puis de (24), (25), (26), (27) pour commander en relais, le déplacement de (6). On notera la disposition symétrique de la construction par rapport à l'axe vertical de rotation de (7), pour compléter l'illustration de la quatrième caractéristique.
   La figure 11 représente le dessous de la vue précédente. On note que les biellettes (24) sont liées en liaison rotule aux pièces (25) et (7). Cela est nécessaire pour maintenir leur fonctionnement lors du levage des modules (4), pour compléter l'illustration de la quatrième caractéristique.
PLANCHE 4/9 :

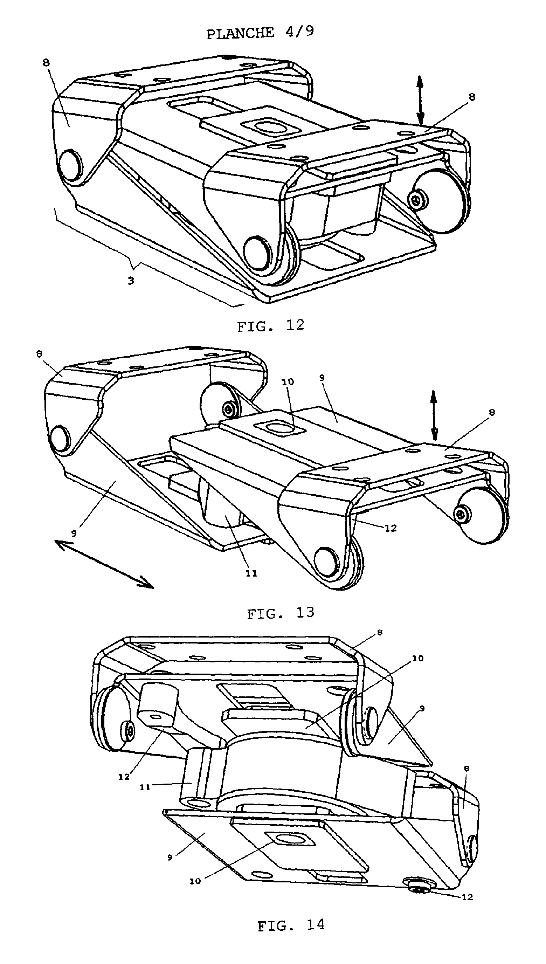

   La figure 12 représente le maillon (3) de liaison entre modules (2) en position de décalage de niveau vertical entre les articulations (8), pour illustration de la cinquième caractéristique.
   La figure 13 représente le maillon (3) de liaison entre modules (2) en position de décalage de niveau vertical entre les articulations (8) et mis en expansion longitudinale, par l'actionneur (11) commandant la translation relative des coulisses (9) sur la pièce centrale (10), par les biellettes (12), pour illustration de la sixième caractéristique.
   La figure 14 reprend la même disposition du maillon (3) suivant une autre vue, pour compléter l'illustration de la sixième caractéristique. On y voit mieux le travail de la biellette (12) de liaison entre (9) et (11).
PLANCHE 5/9 :

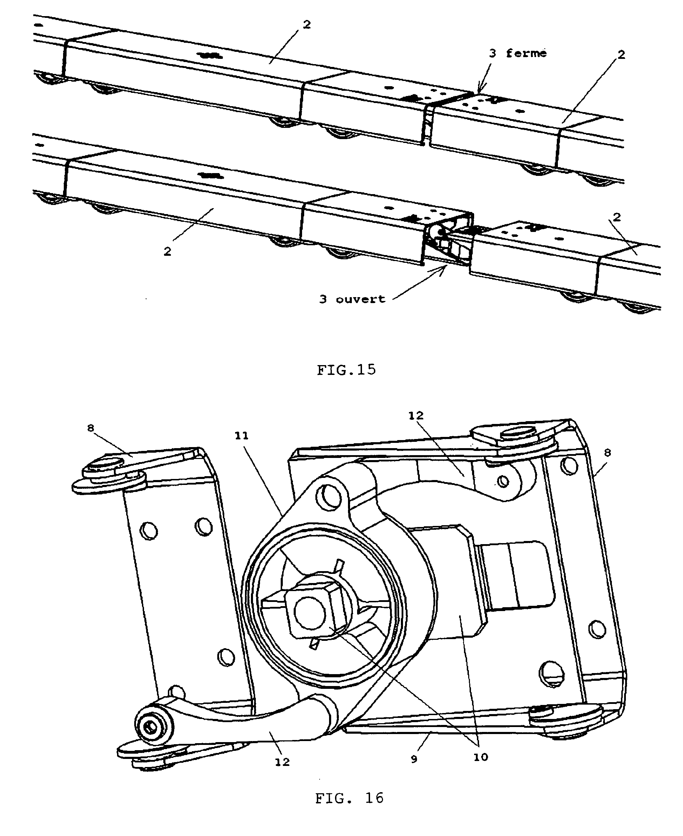

   La figure 15 représente une expression du travail du maillon (3) en rapprochement (fermé) ou en écartement des modules (2) (ouvert), pour compléter l'illustration de la sixième caractéristique. On remarque que le maillon (3) se loge dans les extrémités (6) des modules (2).
   La figure 16 représente, certaines pièces étant cachées, le fonctionnement intérieur de l'actionneur (11), commandant les biellettes (12) pour actionner les translations colinéaires et symétriques des coulisses (9) (dont une cachée ici) glissant sur la pièce centrale (10) pour compléter l'illustration de la sixième caractéristique. On notera la conception de l'actionneur (11), vérin pivotant s'appuyant sur la palette fixe solidaire de (10).
PLANCHE 6/9 :
   La figure 17 représente, pour illustration de la septième caractéristique, l'élément de levage (4) en position basse. La poutre supérieure (19) enveloppe la poutre de base (18). Elles disposent toutes les deux d'une rainure verticale centrale, qui permet au moyen (36) de coulisser verticalement pour descendre ou monter pendant le levage. On peut voir également au moins un actionneur (28), de type vérin souple à soufflet, placé entre les poutres, sans son alimentation.

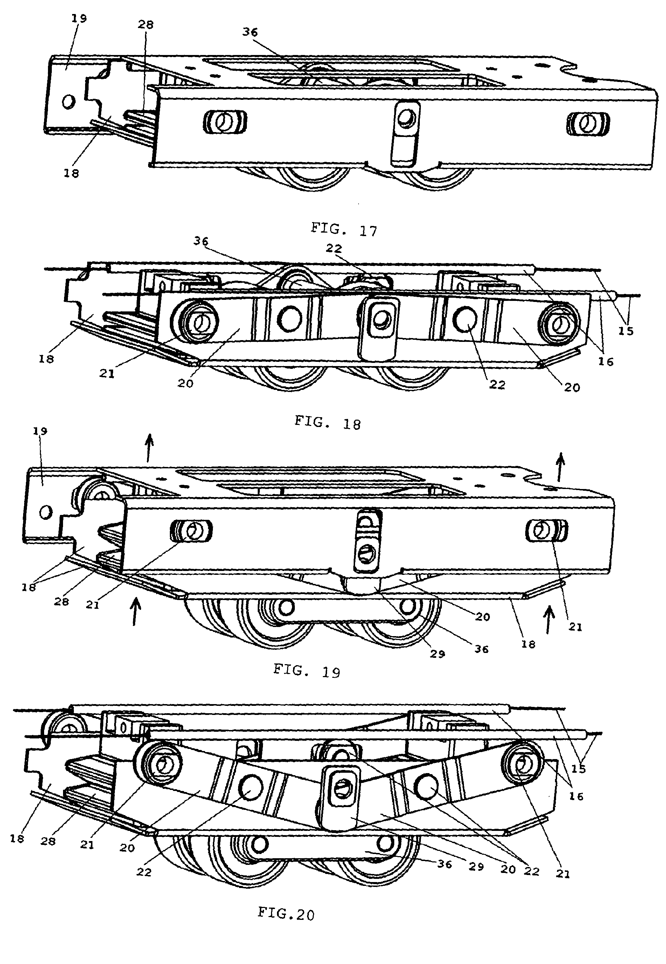

   La figure 18 représente, pour illustration de la huitième caractéristique, l'élément de levage (4), la poutre (19) n'étant pas représentée afin de voir les leviers (20) en action avant le levage. On y découvre la symétrie de conception et de mouvement, les liaisons articulaires (22) coulissant horizontalement avec la poutre (18) et les liaisons articulaires (21) coulissant horizontalement avec la poutre (19), qui garantissent aux leviers (20) un fonctionnement symétrique par rapport au plan vertical médian des poutres, permettant la levée parallèle de la poutre (19) par rapport à la poutre (18) simultanément à la descente du moyen d'appui (36) dans le plan médian vertical. On y découvre également les gaines (16), solidaires de la poutre (19) pour le guidage des câbles (15).
   La figure 19 représente, pour compléter l'illustration de la septième caractéristique, l'élément de levage (4) en position haute. On y découvre le rôle de la double coulisse (29) permettant à l'axe du moyen (36) de dépasser la hauteur de coulisse disponible dans la poutre (19), dont le bord inférieur du coté doit rester fermé, pour maintenir sa tenue mécanique aux sollicitations.
   La figure 20 représente, pour compléter l'illustration de la huitième caractéristique et illustrer la dixième caractéristique, l'élément de levage (4) en position haute, sans la poutre (19). Les liaisons articulaires (21), (22) et la glissière double (29) sont bien visibles. Les gaines (16), fixées sur la poutre (19) apparaissent, ainsi que les câbles (15) de contrôle du lien (1).
PLANCHE 7/9 :

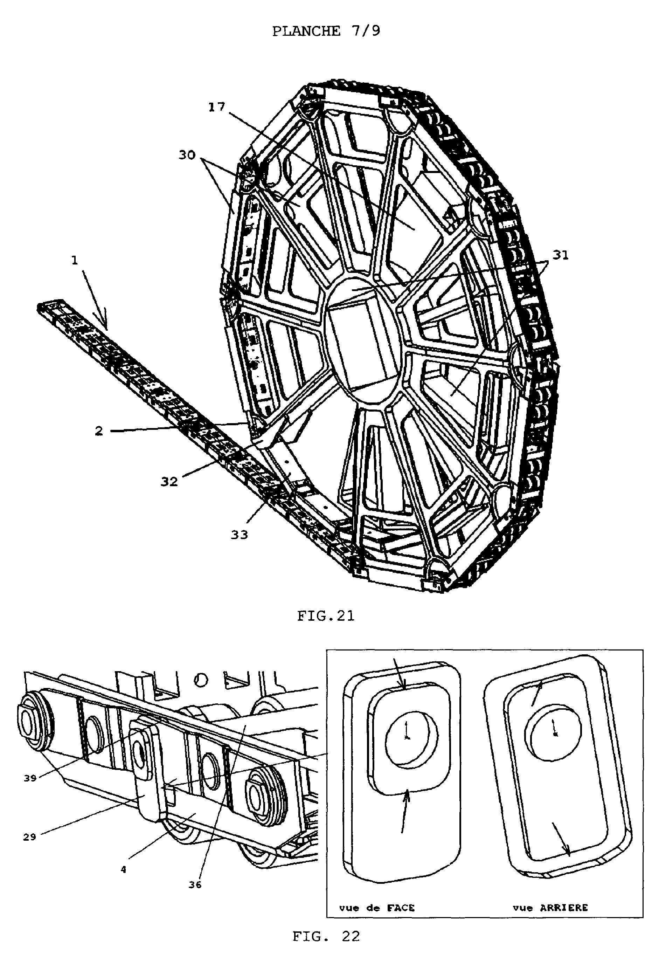

   La figure 21 représente, en illustration des onzième et douzième caractéristiques, un magasin (14) de stockage d'un lien (1). On y découvre la roue polygonale (30) et , à l'intérieur de celle-ci, la roue (31) portant les éléments de la chaîne (33), jusqu'à l'appareil (17), enrouleur dérouleur qui contrôle la longueur et la tension des câbles (15). La butée (32) stoppe le lien (1) dans sa référence d'enroulement, sur la roue (30), tandis que la roue (31) enroule la chaîne de maillons étroits (33) sur ses propres rayons. A la sortie du lien (1), la roue (31) fait tourner la roue (30) jusqu'à ce que la butée (32) après un tour presque complet, vienne se placer suivant un rayon vertical vers le bas. Pour ce faire, elle se place elle-même en butée sur une butée fixe du magasin (14), non représentée. La roue (30) est alors stoppée dans cette position d'attente, tandis que le lien (1), poussé par la roue (31), poursuit sa course de sortie, guidée au sol par des guides complémentaires (non représentés) du magasin (14) monté sur (13). Au retour du lien (1), le dernier module (2) avant la chaîne de maillons étroits (33) bute sur la butée (32), déclenchant la rotation libre de (30), entraînée par (31). Cela suppose que les modules (2) et les maillons (3) sont formatés au minimum, pour leur retour dans le magasin, afin d'occuper toujours le même encombrement. Le changement de format de ces éléments n'est rendu possible qu'à l'extérieur des roues (30), après leur sortie et le verrouillage de ceux qui restent à l'intérieur (système de guide en sortie du magasin (14), non représenté).
   La figure 22 représente pour illustration de la neuvième caractéristique, la double coulisse (29) en vue de face, vue arrière et montée sur le palier (39). La poutre (19) n'est pas représentée. Les flèches sur la vue de Face indiquent les contacts de butée de la coulisse (29) avec la rainure qui l'accueille sur la poutre (19). Les flèches sur la vue Arrière indiquent les contacts de butée de la coulisse (29) avec le palier (39). Le trou central de la pièce (29) sert au montage pour le passage d'un axe pivot de (36) et accessoirement au passage d'une clé de manoeuvre, pour illustrer la seizième caractéristique.
PLANCHE 8/9 :

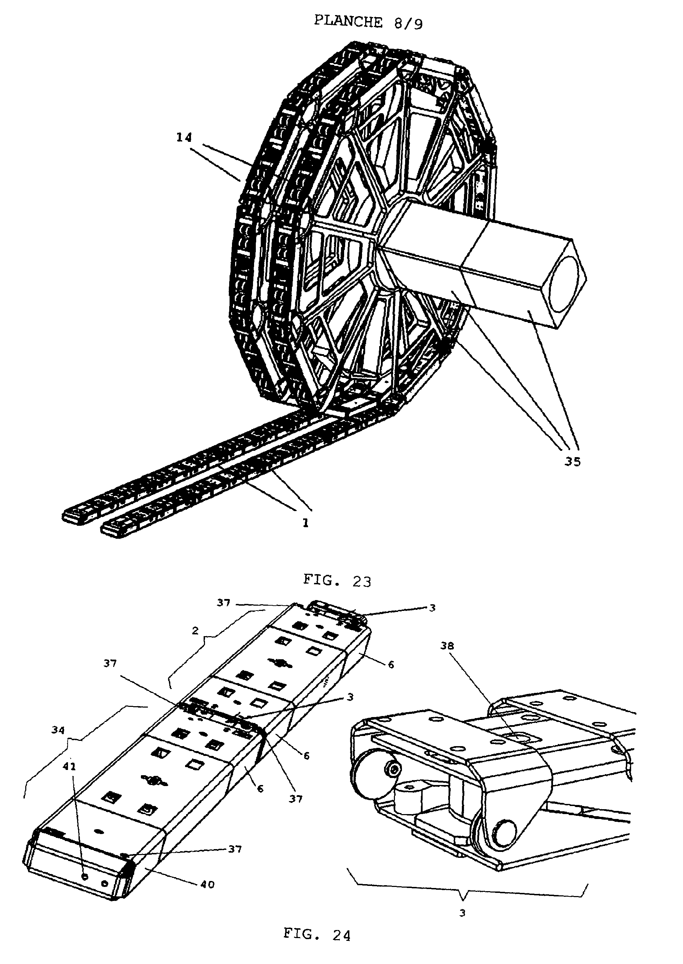

   La figure 23 représente, pour illustration de la treizième caractéristique, un magasin double formé de deux magasins (14) et tout ce qu'ils contiennent, monté sur l'un des trois supports de magasin (35) qui positionnent latéralement les magasins entre eux pour les liens (1) d'une même paire, correspondant à une rangée de palettes, qui positionnent également les paires de liens (1) entre elles selon le nombre de rangées à manipuler.
   La figure 24 représente, pour illustration de la quinzième caractéristique, l'implantation possible des principaux capteurs d'instrumentation d'un lien (1). Le premier module (34) du lien, porte à son extrémité (40) un capteur de contact résistant aux chocs (41) et à l'arrière, sur la pièce (6), au moins un capteur de détection de proximité (37) sans contact pour détection des bords de palettes. D'autres capteurs peuvent être installés sur les modules (2) suivants. Le maillon (3) figurant à droite peut être équipé d'un capteur de détection de proximité sans contact (38) pour détecter la présence éventuelle d'une palette au dessus de lui, pour compléter l'ensemble des moyens de détection de la position des palettes.
PLANCHE 9/9 :

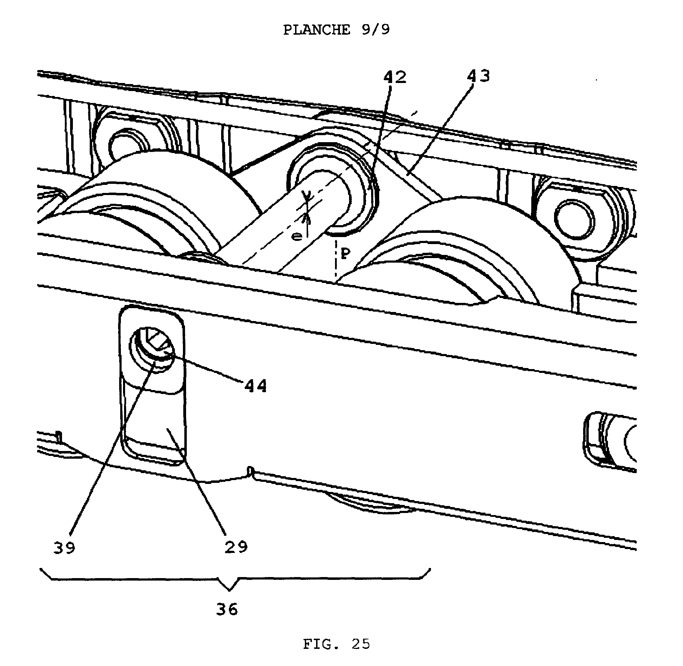

   La figure 25 représente, pour illustration de la seizième caractéristique, le moyen (36) de déplacement et d'appui au sol, dont l'axe (44) reliant les éléments de boggie (43) et (42) présente une excentration au moins à l'une de ses extrémités, guidées dans les paliers (39) coulissant dans la double coulisse (29) de guidage vertical. Un trou hexagonal permet, par une clé adaptée, la manoeuvre de renversement de l'excentration e, pour obtenir l'autre position de l'axe, abaissant le module ou l'un de ses cotés d'une hauteur de 2 x e, la nouvelle position comme la précédente étant verrouillée par un moyen d'indexage courant, réalisé sous la forme d'un poussoir, non représenté, agissant dans la direction indiquée P et installé dans au moins l'un des flasques de boggie (43), par exemple sous la forme d'un ressort poussant une bille, entrant dans l'une des deux cavités diamétralement opposées sur la surface cylindrique de l'axe (44).

Selon au moins un mode particulier de réalisation, le dispositif de manutention horizontale et collective de palettes pour charger ou décharger les véhicules comprend un tracteur (13) support des magasins (14), orientable et mobile dans toutes les directions sur un plan, grâce à moins deux roues adhérentes motorisées séparément et au moins une roue directrice également motorisée pour la direction. Selon un autre mode de réalisation, il peut aussi se déplacer suivant deux rails parallèles fixés sur le quai, alignés sur la direction des bords d'accostage des camions et sera alors doté en plus, de deux degrés supplémentaires pour s'orienter et se diriger vers le camion.

Selon un autre mode de réalisation, le véhicule support (13) peut être équipé de chenilles caoutchoutées, lui conférant les mêmes possibilités.

Visible schématiquement de profil, fig. 2 de la planche 1/9, il supporte sur un axe de sa structure arrière, trois supports (35) de deux magasins (14), visibles sur la fig. 23, qui contiennent les liens de manutention (1) destinés à être introduits sous au moins une rangée de palettes pour charger ou décharger le chargement correspondant.

Chaque support (35) peut se déplacer transversalement avec son ou ses deux magasins (14) sur l'axe de (13), pour préparer l'introduction des liens sous chaque rangée de palettes. De même, chaque support (35) de deux magasins règle l'écart entre les magasins (14) par rapport au type et l'orientation des palettes du chargement. Selon un mode différent de réalisation, chaque support (35) est chargé d'un seul magasin (14) qu'il positionne transversalement par rapport à (13) et aux autres supports (35) chargés comme lui d'un seul magasin.

Selon au moins un mode de réalisation, pour illustrer la seconde caractéristique, chaque lien (1) est constitué d'au moins N modules de manutention de type (2), séparés par (N-1) maillons de liaison (3), N étant compris entre 2 et 13, visibles fig. 3. La chaîne (33) qui prolonge le lien (1) dans le magasin (14), est plus étroite et n'est constituée que de maillons tubulaires dont les fonctions sont de protéger les câbles (15) et les gaines (16) et autres gaines ou tuyaux souples pour les courants et les fluides, d'une part, mais également de tirer ou pousser par action mécanique le lien (1) hors de la roue (30) (voir fig. 21).

Pour illustration de la première et la seconde caractéristique, selon un mode particulier de réalisation, le lien (1) peut espacer ses modules (2) par des maillons (3) articulés par les articulations (8) sur les poutres d'extrémité (6) de chaque module (2) (voir figure 3 planche 1/9 et figure 6 planche 2/9, avant les figures des planches 4/9 et 5/9).

Selon un mode particulier de réalisation décrit dans les figures 4 de la planche 1/9 et 5, 6, 7, 8 de la planche 2/9, chaque module (2), dont les pièces de base sont réalisées en tôlerie par poinçonnage, découpage, emboutissage, pliage, soudure, est réglable en longueur, pour illustrer la troisième caractéristique, afin de s'ajuster à la longueur des palettes courantes utilisées ; dans ce but, il comprend deux éléments de levage (4) détaillés plus loin par les figures de la planche 6/9, reliés par des poutres coulissantes, centrale (5) d'une part, et les deux d'extrémité (6) d'autre part.

La commande d'écartement des éléments (4) se fait par un actionneur tournant (7), attaché sous la pièce (5) par son axe central, actionneur qui, par rotation, entraîne des biellettes (23), visibles figure 9 de la planche 3/9.

Les poutres d'extrémité (6) portantes, coulissant sur les modules (4) sont également commandées par un mécanisme de relais formé des pièces (24), (25), (26), (27), visibles figures 9, 10, 11 de la planche 3/9, mécanisme supporté et guidé par chacun des deux éléments de levage (4).

Le rayon actif commandant les biellettes (23) à partir de l'actionneur (7) est plus grand que le rayon actif commandant les biellettes (24) qui provoquent la translation des tiges (25), si bien que le levier (27) actionné à partir des tiges (25) par le levier de transmission (26) et pivotant sur un axe fixé sur l'élément de levage (4), notamment sur sa poutre de base (18) (voir Fig. 9), démultiplie la course d'écartement A entre les éléments (4) en doublant celle-ci, pour B, de par son mouvement par rapport à la référence centrale fixe de la poutre (5), grâce au choix précis de rapports de rayons actifs et dispositions de levier.

L'ergot du levier (27) fait glisser la poutre d'extrémité (26) par une fourchette, pour effectuer cette course d'écartement B entre les pièces (6), double de A.

Les moyens d'appui (36), chacun composé ici d'un boggie à quatre roues, articulé autour d'un axe se terminant par les paliers (39), dans chacun des deux éléments (4) de levage, se trouvent toujours au quart et aux trois-quarts de la longueur du module (2), donc aux meilleures positions sous la palette, en cas de présence de traverses de palettes au sol, notamment entre celles-ci, comme indiqué figure 4 de la planche 1/9.

L'actionneur (7), sur les planches 2/9 et 3/9, est un vérin rotatif, commandant l'expansion du module (2) quand les câbles (15) l'autorisent à cette opération, hors prise en charge des palettes. A l'inverse, les câbles (15) tendus par les treuils de l'enrouleur (17) permettent de ramener le module (2) à sa longueur la plus courte.

La commande de tous les actionneurs (7) des modules (2) ou (34) d'un même lien (1) peut être collective, ce qui ferait courir seulement un seul tuyau souple d'alimentation entre les modules (4) ou deux tuyaux dans le cas d'actionneurs double effet.

On peut, selon un autre mode de réalisation des modules (2) ou (34), remplacer l'actionneur tournant (7) par un actionneur linéaire installé entre les modules (4), complété d'un mécanisme qui conserverait la cinématique autour de l'actionneur (7) pour la transmission aux poutres d'extrémité (6).

Les articulations (8) permettent des écarts de niveau pendant le transfert des palettes, tandis que le dispositif de réglage de la longueur, constitué des biellettes (12) et de l'actionneur central (11) commande le déplacement des coulisses (9) glissant sur la pièce composite (10), formée de deux glissières et d'une palette centrale pour le vérin tournant (11), palette fixe en rotation par rapport à ces glissières, guidant les pièces (9) l'une sur l'autre, animées en translation par les biellettes (12) (figure 16 planche 5/9).

Cette opération de réglage se fait normalement hors chargement, mais il est possible, qu'une fois les palettes soulevées, on puisse les séparer ou les rapprocher par le mouvement de cet actionneur (11). Les actionneurs (11) seraient alors utilisés, hors traction sur le lien (1) par le tracteur (13), pour espacer ou rapprocher les palettes. Pour aider à rapprocher celles-ci, les câbles (15) peuvent être treuillés de la longueur équivalente aux espaces à réduire non bloqués par les actionneurs (11) des maillons de liaisons (3) restés libres.

Les axes d'articulation (8) sont dans un même plan horizontal quand le lien (1) est sur un plan horizontal. Le maillon (3) suit le mouvement de levage qui accompagne les pièces (5) et (6) des modules (2) ou (34).

Les articulations (8) libèrent les modules des contraintes d'un levage non parfaitement simultané, les actionneurs (28) des éléments (4), visibles planche 6/9, ne pouvant pas tous fonctionner exactement et parfaitement de manière identique, en temps de réponse.

L'actionneur (11), vérin tournant, de même conception que le vérin (7), peut résister à des poussages sur le lien (1) ou même à des tractions s'il est double effet. Cependant, dans le cas où le maillon (3) peut s'allonger et que l'actionneur (11) n'est pas commandé, notamment lors d'un déchargement, les coulisses (9) arrivent sur des butées des glissières (10) pour soulager le mécanisme formé de (11) et (12) et éviter l'arc-boutement qui s'en suivrait. Si on autorise la libre rotation de l'actionneur (11), pendant la traction sur les liens (1), on obtient la séparation des modules (2) portant les palettes, donc leur espacement pendant le déchargement.

Les câbles (15) peuvent soulager les mécanismes d'extension, si nécessaire, pendant la traction sur les liens (1) et peuvent collaborer au retour du maillon (3) à sa longueur mini, les modules (2) étant bloqués dans la longueur choisie par l'actionneur (7).

Selon un mode de réalisation détaillé dans les figures 17, 18, 19, 20 de la planche 6/9, pour illustrer les septième et huitième caractéristiques, les éléments de levage (4) sont construits à partir de pièces de tôlerie par poinçonnage, découpage, emboutissage, pliage, soudure.

C'est notamment le cas des poutres (18), (19), des leviers (20) qui sont les pièces de base du mécanisme de levage. Des vérins souples à soufflets (28) fabriqués en série s'insèrent facilement entre les poutres (18) de base, et (19), supérieure, qui coiffe (18) comme un U retourné.

Les vérins à soufflets sont fixés par la pièce rigide supérieure qui sert également de raccord d'alimentation et collés par leur fond ou vissés, si équipés d'inserts, sur la poutre (18). Ces vérins parfaitement étanches, sans mouvement de tige, fonctionneront à l'air comprimé à pression normale, car ils ont la particularité d'exercer une très forte poussée au début de leur course (poussée nominale x 3), si bien qu'ils conviennent parfaitement à l'usage prévu pour décoller la charge, car cette course faible entre (18) et (19) sera amplifiée par les leviers (20) pour être plus que doublée, si on fait la somme de la course (18)-(19) et de celle entre (18) et (36), course de sortie inférieure du boggie avec ses 4 roues à roulements. L'usage d'un fluide tel que l'eau est compatible avec ces vérins.

Avec un vérin à deux soufflets, la poussée est la même, mais la course est doublée, ce qui donne un avantage sur la course totale amplifiée, sans perdre la capacité de levage.

Selon un autre mode de réalisation, on peut encore optimiser la conception des poutres (18) et (19) en installant des vérins éventuellement à trois soufflets, la place étant disponible, chaque soufflet ayant une course encore plus faible, pour fournir davantage d'effort. La hauteur en position basse de l'assemblage (18) - (19) serait encore plus intéressante si on accepte de faire dépasser les roues de (36) sur le dessus, lorsque le module est en position basse (prévoir alors des découpes dans les pièces (5) et (6) pour leur passage).

On choisirait alors un rapport de leviers (20), donné par les postions de (21) et (22), légèrement plus grand que le rapport actuel.

Ce choix d'architecture permet à l'assemblage poutres (18), (19) de rester peu encombrant en hauteur, même après levage, tout en offrant une course de levage suffisante.

Ce choix facilite l'introduction sous palettes, autorise des levages partiels pour franchissement d'obstacles et traverses si nécessaire.

Chaque module (4) peut être équipé au plus de deux vérins souples (28) capables chacun d'exercer une force importante, or une palette compte deux modules (2) pour la soulever, chaque module comptant deux éléments (4) équipés chacun de deux vérins souples, soit au total un potentiel de levage maximum de 8 fois la force de levage d'un seul vérin, hors frottement dû notamment aux glissières des liaisons (21), (22). D'où une grande capacité de levage pour un encombrement de vérin réduit.

Les glissières des liaisons (21), (22) permettent aux articulations des leviers (20) de glisser dans les coulisses respectivement des poutres (19) et (18), assurant la symétrie du levage et le parallélisme des poutres.

Afin que le module (2) reste horizontal, le levage s'effectue jusqu'aux butées, visibles figure 22 de la planche 7/9, proposées par la double coulisse (29). En effet, lors du levage, l'axe pivot du boggie (36) coulisse par son palier (39) dans la pièce (29). Celui-ci est verticalement entraîné simultanément par les paires des deux leviers (20) en symétrie, de part et d'autre de la poutre (18), à l'intérieur de la poutre (19) en U.

Pour que la course soit suffisante sans entraîner un encombrement en hauteur du module à plat, il faut que l'axe puisse dépasser le bas de la rainure de la poutre (19), d'où le palier (39) qui coulisse dans la double coulisse (29) jusqu'à sa butée, entraînant à son tour la double coulisse (29) jusqu'à sa butée sur le bout de la rainure pratiquée dans la poutre (19).

A l'inverse, quand on rentre le vérin par gravité - poids des charges sur le module (2) - et par aspiration dans le vérin souple (28), la poutre (18) vient en butée sur l'intérieur de la (19) sur toute sa longueur en mettant au passage en contact les butées entre le palier (39) et la double coulisse (29), ce qui fait alors remonter la double coulisse (29) dans la rainure de la poutre (19).

Selon un mode de réalisation visible dans la figure 25 de la planche 9/9, l'axe (44), portant une surface cylindrique excentrée à ses extrémités guidées par les paliers (39), peut, lorsqu'il est manoeuvré par les trous hexagonaux, grâce à ces surfaces excentrées, fournir les deux positions haute et basse de l'axe d'articulation (44) du boggie (36), passant dans l'axe creux (42), en occupant deux positions angulaires diamétralement opposées, positions qui sont verrouillées dans les flasques (43) et l'axe creux (42) du boggie à quatre roues (36) par des poussoirs à billes et à ressort, positions permettant aux paliers (39) actionnés par les leviers (20), de donner au module (2), portant ce maillon (4) de levage deux hauteurs distantes d'une valeur de deux fois l'excentration.

Le réglage de la position choisie se fait par rotation de l'axe (44) au moyen d'une clé hexagonale ou autre, entrant dans un orifice adapté au bout de l'axe et accessible par un orifice pratiqué dans la double coulisse (29). Si on règle les modules (2) et (34) de l'un des deux liens (1) d'une même rangée de palette plus haut que son voisin, alors qu'ils la portent ensemble, cette rangée va s'incliner au levage du coté le plus bas.

En plaçant le lien (1) à excentration donnant la plus grande hauteur sur les bords extérieurs des cotés du chargement, on oblige les charges contenues sur les palettes à s'incliner dans leurs parties hautes vers le milieu du chargement complet, leur évitant de se bloquer et de frotter sur les parois du véhicule, évitant aussi à l'opérateur des problèmes d'obstacles, par charge débordante ou vacillante, lors de l'introduction du chargement dans le véhicule.

Selon un mode de réalisation visible dans les figures 18 et 20 de la planche 6/9 et 21 de la planche 7/9, les câbles (15) passant dans les gaines (16) fixées aux poutres (19) des modules (4) sont reliés chacun d'une part à la pièce (40) d'extrémité du premier module (34) du lien (1), d'autre part à deux treuils distincts de l'appareil (17), enrouleur dérouleur de câble devant contrôler les variations de longueur des maillons (2) et (3) en plus de la longueur initiale minimum.

Le double treuil (17) fixé sur la roue (31) du magasin (14), n'est pas détaillé sur les figures, mais la technologie existe déjà pour délivrer la longueur et contrôler la tension d'un câble.

Ces câbles sont installés de part et d'autre du plan médian moyen longitudinal d'un lien (1), symétriquement. Le contrôle de la tension de chacun des câbles rattrape les jeux articulaires, notamment dans les articulations (8), les glissières (9)/(10), si bien qu'on peut orienter la direction prise par le lien vers la droite, en tirant davantage le câble droit, à gauche en tirant plus le gauche.

La rigidité et la rectitude du lien (1) peuvent être obtenues quand les tensions sont égalisées à une valeur élevée et les longueurs réglées égales, quelque soit le choix homogène du format de longueur choisi pour les modules (2) sortis et quel que soit l'entraxe des articulations (8) des maillons (3) également sortis, qui peuvent être réglés au minimum dans le cas d'un poussage, au maximum dans le cas d'une traction, ou dans un état intermédiaire suivant la longueur détectée du chargement, pour espacer les palettes.

Dans ce dernier cas, une valeur moyenne de l'entraxe des articulations (8) sera calculée à partir de la longueur totale détectée de la cargaison moins le nombre de longueurs de modules (2) ou (34) au format sorti, le tout divisé par le nombre de maillons (3) dans les intervalles.

Selon un mode particulier de réalisation, non représenté, pour que les réglages des maillons (3) soient homogènes, dans ce cas de réglage moyen, on peut opposer au couple du vérin tournant (11), un ressort de rappel en torsion dont le couple résistant est proportionnel à l'angle de rotation. Ainsi, en réglant une pression homogène dans tous les actionneurs (11) choisis à simple effet, on peut obtenir un entraxe des articulations (8) assez homogène sur l'ensemble du lien (1), avec suffisamment de précision pour qu'un module (2) ne soit pas à cheval sur deux palettes voisines.

Le ressort de rappel peut contribuer avec les câbles (15) au retour du maillon (3) à son entraxe minimum.

Selon un mode particulier de réalisation détaillé par la figure (24), le module (34) d'extrémité d'un lien (1) comprend, comme les autres modules (2), les mêmes éléments fonctionnels de levage et de déplacement présents dans les modules (2), hormis l'extrémité (40) au bout du lien qui présente plusieurs différences par rapport à une extrémité (6) standard. D'une part, les câbles (15) y sont fermement attachés par leur extrémité, un logement des têtes de câbles étant prévu. D'autre part, le nez de la pièce de bout (40) est pourvu d'un pare-choc dont une partie rigide pouvant absorber les chocs durs, est précédée d'une partie souple activant un capteur de contact (41), quand le nez touche un obstacle (cloison du fond de la remorque d'un camion, palette effondrée, plancher brisé, ...).

Selon ce mode complémentaire de réalisation, des capteurs de proximité (37) peuvent équiper le coté et le dessous de la poutre (6) du premier module (34), en tête du lien (1), mais également les poutres (6) des autres modules (2) pour vérifier la position des bords de palettes selon le choix du format pour renseigner l'opérateur sur le positionnement du lien (1).

Dans le même esprit, en complément éventuel, la pièce (10) au centre des maillons (3), pivot de l'actionneur (11), peut recevoir un capteur de proximité sans contact (38), pour détection éventuelle d'une palette au dessus d'elle, ce qui équivaudrait à un mauvais positionnement du lien (1) - voir plus loin, la procédure d'utilisation.

Selon d'autres modes complémentaires de réalisation, les gaines (16) et les autres gaines d'alimentation des capteurs reliant le module d'extrémité (34) au système d'information et de commande sur le tracteur (13) sont des gaines détachables, fixées sur les dessus des modules (2), notamment des pièces (5), encastrées suffisamment pour être protégées, ou couvertes d'une plaque de tôle démontable, afin de faciliter l'interchangeabilité des modules (2) en cas d'avarie sur l'un d'eux, s'il advient nécessaire d'ôter l'un des modules (2) d'un lien (1) sans démonter tout le lien.

Selon le même mode, l'interchangeabilité des éléments de levage (4) est souhaitée, pour dépanner rapidement un module (2).

La conception finale de ces modules tiendra compte de ce principe de dépannage.

Dans ce but et selon deux modes particuliers de réalisation, on peut choisir des technologies de commande des mouvements, soit à base d'hydraulique - dans ce cas, le fluide peut être de l'eau -, soit à base d'air comprimé.

L'un des aspects particuliers du dispositif est que l'ensemble des liens (1) devant manipuler tout ou partie d'une rangée de palettes n'est à priori pas complètement sorti du magasin (14) et du guide de sortie. Si bien que les modules (2) de levage et de déplacement qui y sont contenus, comme les maillons (3) de liaison entre eux, ne doivent pas modifier leur forme, leur taille. Les actionneurs correspondants doivent donc être neutralisés.

Selon ces modes de réalisation particulière, l'implantation dans chaque module (2) de micro-distributeur à commande indexée sur la position et l'utilité de l'usage des différents actionneurs permettra de différencier cet usage en fonction de la quantité des modules et maillons sortis du magasin, que l'énergie soit pneumatique ou hydraulique.

Dans le cas d'un emploi de l'énergie pneumatique pour la variation de longueur des modules (2) et maillons (3), à partir des actionneurs (7) et (11), l'implantation de ces micro-distributeurs n'est pas impératif, si les composants contenus dans le magasin sont bien maintenus.

Les vérins tournants (7) et (11) peuvent être alimentés en air à plus haute pression et en aménageant au mieux leur encombrement et le ressort de rappel en torsion, à couple de rappel proportionnel à l'angle de rotation, permettant le réglage des courses angulaires de ces vérins. Le fait de conserver surtout des vérins simple effet entraîne moins de tuyaux à connecter et à faire passer dans les modules, solution qui simplifie les interconnexions en diminuant leur nombre.

En ce qui concerne le levage des modules (4) par les vérins souples équipant les éléments (4), l'usage d'un fluide hydraulique semble préférable pour la capacité de levage. L'emploi de micro-distributeurs pilotés en fonction de la position des modules (2), hors ou dans le magasin (14), devient nécessaire pour conserver à ces modules la forme nécessaire à leur encombrement en magasin.

L'opération de mise à longueur, hors prise en charge des palettes, ne peut se réaliser si le module est en contact sur le dessous de la palette, comme c'est le cas lorsqu'elle est soulevée. La mise à longueur reste possible après introduction des liens (1), tant que la commande de levage n'est pas actionnée, cela, qu'il y ait des traverses au sol à franchir ou non. Les modules de type (2) et les maillons de liaison de type (3) encore prisonniers de la roue (30) par le guide de sortie de magasin, non représenté, auront leur format bloqué par cette roue et par le guide, qui les verrouille latéralement pour empêcher tout glissement, leurs actionneurs étant neutralisés, alors que les modules (2) et les maillons (3) libérés de la roue (30) pourront modifier leur longueur selon les besoins.

Le lien (1), constitué des modules (2) et des maillons (3) libérés, mais bloqués respectivement par les actionneurs (7) et (11) dans le format choisi, s'est engagé sous le chargement et peut le soulever en partie ou en totalité, selon la pénétration souhaitée et détectée après positionnement grâce aux équipements de détection sur le module (34) d'extrémité (figure 1 de la planche 1/9), puis peut engager le déplacement.

Selon un mode particulier de réalisation, on peut conformer l'actionneur (7) pour qu'il propose, en l'absence d'énergie, une position de blocage, due à l'irréversibilité du mécanisme auquel il appartient. Notamment, pour un format court de palettes, la traction sur le lien (1) donc sur les modules (2) sera sans effet sur l'actionneur (7), s'il est en position d'irréversibilité de rotation, quand le format est au minimum. Les leviers qui le solliciteraient sont alors en position d'arc-boutement.

Selon un mode complémentaire de réalisation, dans le cas d'une rangée lourdement chargée, avec des palettes demandant le format maximum au module (2), des butées installées entre les poutres (5), (6) et les dessus (19) des modules (4), par des plis de tôle servant de butées dans des rainures pratiquées sur (5) et (6), peuvent venir soulager les pièces du mécanisme (24), (25), (26), (27, notamment l'ergot de (27) et la fourchette sur (6) qui par leur taille n'ont pas à supporter cette traction et ne seront pas sollicités.

Selon un mode de réalisation proposé par la figure 21 de la planche 7/9 et 23 de la planche 8/9, le tracteur (13), non représenté sur ces figures, mais présent sur la figure 2 de la planche 1/9, porte derrière la cabine un container contenant six magasins (14), tels que celui de la figure 21, planche 7/9.

Ces six magasins sont montés deux par deux sur trois supports de magasin (35), tels que visibles sur la figure 22 de la planche 8/9.

Mais ils peuvent également selon un autre mode de réalisation, pour obtenir le bénéfice d'une simplification, être installés chacun sur un support (35). Les supports (35) sont montés sur un axe porté par le container de (13), peuvent coulisser horizontalement sur cet axe creux, s'y positionner pour placer chaque magasin (14) face à la rangée à manipuler, axe servant aussi de gaine aux liaisons énergétiques avec le reste de la machine, pour son pilotage.

Par chacun des supports (35), on peut déplacer les magasins (14) en positionnant transversalement la roue (31), considérée alors comme support des roues à flasque (30) et de tout ce qu'elle contient, notamment le lien (1) avec tous ses modules (2), la chaîne technique (33), liaison mécanique et énergétique avec la roue (31), elle-même reliée au support au support (35) par des flexibles, non représentés, dont la longueur correspond à un tour minimum de la roue (31), logés dans l'espace occupé actuellement par les rayons de la roue (31), aménagés dans ce but.

L'enrouleur dérouleur (17) est fixé sur cette roue (31) et commande les câbles (15) au travers des différentes gaines équipant la chaîne de maillons (33). Il faut savoir que le travail sur les câbles se fera surtout quand le lien (1) et la chaîne (33) seront sortis, ce qui limitera les frottements du câble (15) dans les gaines où il passe.

Selon un autre mode de réalisation, chaque magasin (14) comprend une roue (30), une roue (31) et un support (35) qui positionne transversalement, cette fois chaque magasin (14) individuellement au lieu de positionner la paire de magasins, puis de déplacer chacun l'un par rapport à l'autre.

Ce dernier mode de réalisation est sans doute plus simple, plus standard et permettra surtout une interchangeabilité des magasins, pour un dépannage rapide du dispositif. Selon ce mode, on peut écarter hors de la zone de chargement les magasins (14) inutiles, notamment si la cargaison comprend seulement deux rangées de palettes.

Le mode de fonctionnement du magasin (14), selon au moins un mode de réalisation, prévoit que le premier module (2) rentrant dans le guide du magasin (14) rencontre les butées (32) sur la roue (30), ce qui déclenche la rotation de la roue (30), entraînée par la roue (31) tirant sur la chaîne de maillons (33), commandée par un actionneur tournant installé sur (35) ou dans un autre mode de réalisation, un mini moteur installé sur (31) dont le pignon engrène sur une couronne de (35).

Les pas des modules correspondent au polygone de la roue (30), si les modules (2) ont été repliés avant d'être rentrés en magasin, ce qui doit être fait pour gagner de la place.

Il n'est pas utile de rentrer tous les modules (2). Un voire deux peuvent rester sortis dans le guide horizontal du magasin (14), qui passe sous la cabine de pilotage du tracteur (13). (Non représenté sur les figures). La roue (30), le guide de sortie des liens (1) obligent par verrouillage, les modules (2) et maillons (3) à conserver leur format, même si les commandes d'expansion sont utilisées pour les formats des modules sortis libres du magasin. Cette solution est compatible avec des actionneurs (7) et (11) à commande pneumatique.

Dans la phase chargement, sachant que le tracteur (13) va pousser les palettes chargées sur les modules (2), la mise au format de ceux-ci aura lieu avant la levée des modules, tandis que les maillons (3) se réduiront sous la poussée, en mettant au contact les palettes. Si on veut retarder le contact entre palettes, lors de la poussée, il faut utiliser les actionneurs (11) commandés en extension des maillons (3). A la fin du chargement, quand le capteur de contact sur l'extrémité (40) signale que le bout du contenant est atteint, le resserrage des palettes s'obtient en relâchant la pression des actionneurs (11), qui laissent les maillons (3) se réduire.

Dans la phase de déchargement, le tracteur (13) va tirer sur les liens (1) pour sortir les rangées de palettes du contenant où elles se trouvent. Après l'introduction des liens jusqu'au bout du contenant avec la mise au format des modules (2) par les actionneurs (7), les maillons (3) étant normalement au minimum, l'opérateur commande la levée et tire sur les liens (1) pour la sortie des palettes. Les actionneurs (11), libres, autorisent les maillons (3) à s'allonger progressivement, laissant les palettes sortir avec un démarrage progressif dû à leur espacement progressif. Après la dépose, le repli des liens (1) suit la procédure de traction sur les câbles (15), pour réduire le format des modules (2) et des maillons (3), avant de rentre les liens dans les magasins (14).

L'application industrielle majeure réalisable à partir du dispositif décrit ci-dessus concerne la réception et le départ des marchandises à partir d'un entrepôt doté de quai de chargement et de déchargement.

Lorsqu'un camion ou autre véhicule accoste par l'arrière au quai, après ouverture des portes, il y a mise à niveau du plancher du camion par rapport au quai, pour que les chariots ou transpalettes viennent prendre une par une ou deux par deux les palettes du chargement.

Commence alors un ballet d'allers et retours au mieux presque aussi nombreux que les palettes. Idem pour recharger le camion. D'où un temps d'immobilisation du véhicule routier et un grand nombre d'opérations liées à la main d'oeuvre.

Avec le dispositif décrit, l'opération consiste à placer le tracteur (13) dans les références du camion. L'opérateur peut s'aider de lignes tracées au sol, de capteurs optiques, caméras ou de capteurs de visée laser, de télémètres pour positionner le tracteur (13) face à l'ouverture, par triangulation.

Ensuite, il identifie le chargement, d'une part par la feuille de route du chauffeur, d'autre part, par une observation minutieuse (type de palettes, orientation, nombre de rangées, nombre par rangées). Il programme alors sur son pupitre les paramètres du chargement. Des sous-programmes peuvent autoriser des réglages automatiques des liens (1) à sortir en nombre de rangées, en longueur totale, en format. Les liens (1) sortent des magasins (14) à l'entraxe des ouvertures des palettes. La longueur totale utile est sortie pour régler le format des modules (2), hors ou directement sous le chargement.

Simultanément commence alors l'introduction des liens (1) dans les premières palettes au bord et s'arrête quand les capteurs (37) de proximité des poutres (6) du module (34) lui signalent qu'il a franchi la première palette (capteurs en limite de (6), à l'avant et l'arrière du premier module (34)).

Avec le télémètre, il peut faire deux visées, l'une au fond du camion, l'autre sur le début du chargement, au plus près du tracteur (13). Il obtient, en tenant compte de la première palette, la longueur des rangées, calcule les écarts moyens entre palettes pour régler les modules (3).

Naturellement, ces opérations peuvent être automatisées à partir de la saisie de données du chargement.

Enfin il actionne le tracteur en marche avant.

Les liens (1) continuent leur pénétration dans les rangées simultanément (s'il n'y que deux rangées, deux des six magasins ne sont pas actionnés).

Son avance au sol est donnée par le télémètre pointant un repère fixe. Compte tenu du format des palettes, s'il avance d'au moins une longueur de palette par rapport au signal précédent, il doit détecter bientôt un nouveau bord de palette avec le même détecteur, si bien qu'au fil de son avance dans les rangées, le même détecteur lui signale les bords de palette rencontrées, lui donnant une image fidèle du chargement complet et de l'espace entre palettes.

Il utilisera cette image pour régler au mieux les longueurs des maillons (3), avant de procéder à la levée, soit en faisant une moyenne, soit, si l'instrumentation des liens (1) le permet, au cas par cas.

Il peut procéder rangée par rangée, assisté par des sous-programmes d'automatisation qui gèreront l'introduction des liens (1) et l'état des différents actionneurs, principalement (7) et (11), en collaboration avec les treuils (17) gérant la longueur des câbles (15). Ainsi, l'ensemble des rangées peut être traité simultanément.

Plus généralement, lorsqu'il a franchi l'espace normal qui amène le premier module (34) d'extrémité au bout de la remorque, dans chaque rangée, que les sous-programmes lui aient donné quitus des réglages des modules (2) et des maillons (3), il enclenche le levage simultané pour toutes les rangées.

Quand les palettes sont toutes levées, il commence à reculer sur le quai pour sortir simultanément toutes les palettes. Il peut relâcher après levage, le réglage des maillons (3), pour augmenter l'espace entre palettes, si nécessaire. Il les dépose et retire les liens (1) en position basse, en les ayant reformaté au minimum, grâce aux câbles (15) puis les fait rentrer dans les magasins (14).

Pour le chargement d'une remorque, les rangées étant préparées, alignées sur le quai dans une aire délimitée, le tracteur (13) se met derrière, en s'alignant au sol grâce à des bornes ou des capteurs optiques. L'opérateur sort les liens (1), les engage sous la première palette, jusqu'à détection, puis sort la totalité des modules utiles sous les rangées et réalise ensuite, comme pour le déchargement, la lecture des positions des bords et l'adaptation de format.

Il peut procéder au levage des palettes, puis procède à leur rapprochement, aidés par les câbles (15) en complément des actionneurs (11), libres), avant d'en faire le poussage dans la remorque, guidé dans cette dernière opération, par des caméras surplombant le chargement et par le télémètre laser.

Après dépose, il peut retirer les liens (1) en espaçant au besoin les modules (2) pour faciliter leur retrait.

Le quai peut accueillir une sorte de plate-forme encastrée qui reçoit le chargement ou celui en préparation de transfert dans la remorque. Dès le retrait des liens (1) et le recul du tracteur, s'il y a la place, la plate-forme peut être déplacée par un moyen quelconque (pont roulant, chariot roulant porteur de la plate-forme sur rail, ...).

L'avantage d'une telle solution serait de permettre la préparation du chargement à charger ailleurs que sur l'aire de chargement, préparation amenée sur une plate-forme, positionnée derrière le véhicule à charger avec précision et reprise immédiatement par le tracteur (13) en position qui engagerait immédiatement ses liens (1) pour pousser le chargement dans le camion.

Selon un autre mode particulier de réalisation, on peut aussi utiliser le principe du dispositif pour réaliser un appareil de taille plus petite à partir d'un chariot sans fourche, mais équipé de deux liens (1) de quelques modules (2) et (3), qui se retireraient dans des magasins (14) très simplifiés, à écartement réglable. Cette application pourrait intéresser les petites entreprises de transport, différentes des équipementiers en logistique, qui ne souhaiteraient pas s'équiper d'un matériel trop lourd en investissement et qui se contenteraient de charger ou décharger jusqu'à 7 palettes à la fois, sur une rangée seulement. Dans ce cas, pour décharger 33 palettes (3 rangées de 11 palettes au format 1200), il faudrait 6 allers et retours sur le quai, aire sur laquelle il faudrait amener ou débarrasser les 6 à 7 palettes à charger ou à décharger, avec un moyen complémentaire adapté. L'équipement serait plus modeste et aussi plus rapide à mettre en oeuvre, l'investissement plus léger, mais le gain de temps serait plus minime. On peut envisager aussi un équipement qui pourrait prendre jusqu'à trois rangées en largeur et trois ou quatre palettes en profondeur.

## Revendications

1. Dispositif de manutention horizontale et collective de palettes pour charger ou décharger les véhicules, **caractérisé en ce qu'**il comprend au moins une paire de liens flexibles (1), formant deux trains d'éléments s'étendant horizontalement en chaîne et en lignes parallèles, destinés au levage vertical et au déplacement d'un chargement constitué d'au moins une rangée de palettes alignées, comprenant chacun, d'une part au moins deux ensembles modulaires (2) de levage vertical et de déplacement, équipés chacun pour cela de moyens propres de levage (4) par appui au sol, de format variable adapté au format utilisé de longueur horizontale de palette, équipés chacun pour cela de moyens propres d'expansion (7), et articulés entre eux d'autre part au moyen d'au moins un autre élément (3), dit maillon de liaison, de longueur horizontale également variable, adaptée à l'écartement voulu entre palettes, doté pour cela d'un moyen propre de réglage de longueur, l'ensemble formant un train d'éléments articulés, au moyen duquel on lève simultanément et on déplace simultanément d'une seule masse les palettes ordonnées du chargement, après introduction de ces liens (1) sous le chargement, se déplaçant au sol suivant une direction ajustable au moyen d'éléments directionnels (15), de type câble, agissant par tension collectivement sur tous les éléments d'un même lien (1) pour corriger la direction prise par l'extrémité libre, les dits liens pénétrant par les orifices prévus dans les palettes destinés traditionnellement à l'engagement des fourches de chariots élévateurs ou des transpalettes, au moyen du déplacement dans la même direction du véhicule tracteur ou pousseur, dit tracteur (13), porteur et positionneur de ces liens flexibles de manutention (1), selon la quantité présélectionnée et ordonnée de palettes devant entrer ou sortir par l'accès unique du véhicule recevant le chargement.

2. Dispositif selon la revendication n°1, **caractérisé en ce que** le dispositif comporte à cet effet, pour chaque lien flexible (1), au moins deux modules (2) de levage vertical et de déplacement comprenant chacun au moins deux éléments porteurs (4) de levage, équipés chacun d'au moins un moyen (36) de déplacement et d'appui au sol, reliés entre eux par au moins un élément de structure portante intermédiaire (5) et, aux extrémités des dits modules (2), au moins un élément de structure portante d'extrémité (6), tous éléments (5) et (6) coulissant horizontalement sur les dits éléments porteurs de levage (4), pour répartir en longueur, la position des moyens de déplacement et d'appui au sol (36), et adapter le format du module (2) au format de longueur horizontale des palettes à manipuler.

3. Dispositif selon les revendications n° 1 et n°2, **caractérisé en ce que** le module de levage et de déplacement (2) comprend au moins un moyen (7) d'expansion horizontale et longitudinale du module (2), qui, en agissant sur les écartements entre les éléments de levage (4), déplace le moyen de déplacement et d'appui au sol (36) de ces dits éléments (4), plaçant ceux-ci au milieu de chaque fraction égale de la longueur totale de la palette, obtenue par division de cette longueur par le nombre d'éléments (4) contenus dans le module (2), fraction affectée à chacun des éléments (4), pour équipartition de la charge sur tous les moyens de déplacement et d'appui au sol (36).

4. Dispositif selon les revendications n° 2 et n°3, **caractérisé en ce que** le moyen (7) d'expansion horizontale et longitudinale du module (2), en agissant sur la course d'écartement entre les éléments de levage (4), agit simultanément sur la course d'écartement des éléments de structure portante d'extrémité (6), notamment en doublant pour ceux-ci, la course d'écartement obtenue entre éléments (4), au moyen d'un mécanisme supporté par les dits éléments (4), relayant et amplifiant le mouvement entre le moyen d'expansion (7) et les éléments (4), permettant ainsi par la commande des moyens d'expansion (7), la mise au format des modules (2), selon le format utilisé de palette et assurant l'équipartition de la charge sur les appuis au sol des éléments (4), disposés au milieu des fractions égales de la longueur du format.

5. Dispositif selon l'une quelconque des revendications n°2 à n°4, **caractérisé en ce que** le maillon de liaison (3) entre les modules (2) comprend au moins deux articulations (8) d'axe horizontal au moins perpendiculaire à la direction générale d'un train de modules (2), fixées aux extrémités de ces modules (2), permettant aux dits modules, lors de leur déplacement et de leur levage, des mouvements libres et indépendants de découplage mécanique, acceptant les écarts relatifs de niveau vertical et d'inclinaison des palettes, par rapport au plan horizontal, suivant au moins deux degrés de liberté, dont au moins une rotation autour d'un des axes horizontaux et au moins une translation curviligne dans un plan vertical perpendiculaire à au moins un des axes horizontaux.

6. Dispositif selon l'une quelconque des revendications n°2 à n°5, **caractérisé en ce que** le maillon (3) de liaison entre les modules (2) de levage vertical et de déplacement comprend au moins deux pièces (9), articulées chacune sur l'un des modules (2), coulissant sur une glissière centrale (10), permettant de régler la distance entre les articulations au moyen d'un actionneur (11), prenant appui sur une glissière centrale (10), pour régler l'écart longitudinal entre deux modules (2) consécutifs, pour les positionner sous les palettes dans le but d'éviter leur mauvais positionnement et pour rapprocher les palettes qu'ils soulèvent, si nécessaire jusqu'au contact, lors d'un poussage du chargement par le tracteur (13), ou à l'inverse lors de la traction par le même tracteur (13), pour contrôler leur espacement, afin d'éviter les collisions entre palettes et faciliter leur manoeuvre de séparation.

7. Dispositif selon l'une quelconque des revendications n°2 à n°6, **caractérisé en ce que** l'élément (4), dit élément porteur de levage équipant les modules (2) de levage vertical et de déplacement, comprend au moins deux poutres horizontales, de direction commune suivant la longueur de l'élément porteur (4), l'une, poutre inférieure (18), base de la structure de l'élément porteur (4) et l'autre, poutre supérieure (19), dessus de la structure de l'élément porteur (4), dont l'écart vertical par rapport à la poutre inférieure (18) varie au moyen d'au moins un actionneur (28) compris dans l'espace entre poutres, protégé par celles-ci, prenant ses appuis sur elles et dont la course, reprise au moyen d'au moins un levier (20) articulé par des liaisons articulaires (21) et (22) coulissant horizontalement respectivement sur les poutres supérieure (19) et inférieure (18), provoque le déplacement vertical amplifié, conjugué et opposé en sens, d'un moyen (36) d'appui au sol et de déplacement, réglant et contrôlant la hauteur totale entre les appuis au sol et le dessus de la poutre supérieure (19), entre un minimum pour position basse dans l'introduction du lien flexible (1) sous les palettes, et un maximum pour position haute, pour les soulever sur les appuis du moyen de déplacement (36).

8. Dispositif selon la revendication n°7, **caractérisé en ce que** les deux poutres horizontales de chaque élément porteur de levage (4), l'une, poutre inférieure (18) et l'autre, poutre supérieure (19) sont maintenues parallèles dans leur déplacement relatif, au moyen d'au moins deux leviers (20), placés dans une disposition symétrique par rapport au plan médian de l'élément porteur (4) selon sa longueur, d'une part liés de chaque coté de ce plan médian par des liaisons articulaires (22) et (21), elles-mêmes installées dans des positions symétriques par rapport au même plan médian et coulissant horizontalement respectivement sur les poutres (18) et (19), puis d'autre part articulés entre eux par une extrémité commune au moyen d'un axe d'articulation qui se déplace dans le même plan vertical médian de la longueur de l'élément porteur (4), axe qui commande solidairement le déplacement de l'axe propre de l'articulation du moyen (36) de déplacement et d'appui au sol, placé également dans le même plan médian de l'élément porteur (4), leviers (20) dont les mouvements ainsi guidés symétriquement par rapport au plan médian de l'élément porteur (4), obligent les liaisons articulaires (21) et (22) à maintenir les poutres (19) et (18) parallèles, lors du fonctionnement des actionneurs (28).

9. Dispositif selon la revendication n°8, **caractérisé en ce qu'**une pièce (29), dite double coulisse, coulissant verticalement, d'une part dans la poutre supérieure (19) de l'élément porteur (4) dans une rainure centrée sur le plan médian vertical, et guidant verticalement d'autre part, par l'intérieur de l'élément porteur (4), un palier (39) de l'axe d'articulation du moyen de déplacement et d'appui (36), autorise le dit axe d'articulation du moyen (36), par son palier (39), à dépasser la limite de déplacement dans la rainure de la poutre supérieure (19), en se déplaçant elle-même dans cette rainure jusqu'à ses butées, permet par ses propres butées intérieures avec le palier (39) de l'axe d'articulation du moyen (36), de limiter la course de levage ou de descente de l'élément porteur (4) dans ses positions extrêmes par rapport à la poutre supérieure (19) et au palier (39).

10. Dispositif selon l'une quelconque des revendications précédentes, **caractérisé en ce que** chaque lien flexible (1) comporte sur tout ou partie de sa longueur, au moins deux éléments directionnels (15), de type câble, de contrôle, d'allongement élastique faible, attachés au moins à l'extrémité libre du lien (1), disposés symétriquement de part et d'autre du plan moyen vertical et longitudinal d'un lien flexible (1), guidés le long du lien (1) par des gaines (16) solidaires des modules de levage (2), tendus entre les extrémités du lien (1), agissant par leur longueur et leur tension sur la rectitude et la rigidité du lien (1), agissant notamment sur la direction prise au sol par l'extrémité libre du lien (1), compte tenu des jeux articulaires présents dans les assemblages en chaîne, lors de ses déplacements commandés par le tracteur (13) porteur et positionneur de ces liens.

11. Dispositif selon l'une quelconque des revendications n°1 à n°10 combinées nécessairement aux revendications n°3 et n°6, **caractérisé en ce que** les éléments directionnels (15), de type câble, de chaque lien flexible (1) sont réglés en longueur et en tension au moyen d'un appareil d'enroulement et de déroulement (17), situé à l'arrière des liens flexibles (1), du coté opposé à leur introduction, qui délivre ou tend chaque câble individuellement ou collectivement pour un lien (1) selon les besoins directionnels de l'extrémité libre du lien (1), du besoin en longueur totale de ce lien, notamment des besoins des moyens (7) d'expansion horizontale et longitudinale et des actionneurs (11), allongeant ou réduisant, en groupe ou individuellement, respectivement les longueurs des modules (2) de levage vertical et de déplacement et des maillons de liaison (3), en participant au contrôle du format des dits modules (2) dans l'adaptation de leur longueur au format de palettes, en collaboration avec le moyen (7) d'expansion horizontale et longitudinale des dits modules (2) indépendamment des autres maillons (3), en participant également au contrôle du format des maillons (3) de liaison, en collaboration avec l'actionneur (11) d'expansion longitudinale des dits maillons indépendamment des autres modules (2), en participant au contrôle global de la longueur du lien flexible (1) dans son utilisation courante, notamment pour indiquer la longueur introduite sous une rangée de palettes et pour participer activement à la réduction totale de cette longueur lors du retrait des liens flexibles (1) dans une position de stockage.

12. Dispositif selon l'une quelconque des revendications précédentes, **caractérisé en ce que** le tracteur (13) porteur et positionneur des liens flexibles de manutention (1), chargé de contenir au moins l'ensemble des éléments d'un lien (1), d'en réduire l'encombrement de stockage, d'en guider le mouvement pour son introduction sous le chargement ou son retrait, comprend à cet effet au moins un magasin (14) de guidage et de rangement du lien (1), comportant une première roue (30) à au moins un flasque à jante de forme polygonale recevant, guidant et supportant les modules (2) de levage vertical et de déplacement et les maillons de liaison (3) du lien (1) dans une disposition circulaire compacte, installés dans cette roue (30) au moyen d'une autre roue (31) placée à l'intérieur de cette roue (30) et coaxiale à celle-ci, recevant et supportant, d'une part une chaîne de maillons (33) de liaisons mécanique et énergétique avec le lien flexible (1), de largeur horizontale plus faible que celle des modules (2) du lien (1) afin de passer librement dans la largeur de la roue (30) et d'autre part destinée à pousser le lien (1) contenu dans le magasin (14) hors de la roue (30), par rotation libre de celle-ci, en commandant sa propre rotation par un actionneur tournant autour de l'axe commun avec cette roue (30), une butée (32) stoppant la rotation libre de la roue (30) à la fin du vidage de celle-ci, libérant le lien (1) de cette roue dans sa sortie, ou à l'inverse, lors du mouvement de rentrée du lien (1), déclenchant la rotation de la roue (30), en tirant le lien (1) vers les butées (32) par la chaîne de maillons (33) au moyen de la roue (31), mise en rotation par son actionneur.

13. Dispositif selon l'une quelconque des revendications précédentes, **caractérisé en ce que** le tracteur (13) porteur et positionneur des liens flexibles de manutention (1), comprend au moins un support de magasins (35), chargé d'au moins un magasin (14) contenant le lien (1), chargé au plus d'une paire de magasins (14) et doté dans ce cas des moyens de réglage de l'écart transversal entre les deux magasins (14) supportés, selon la distance entre les orifices d'introduction d'une rangée de palettes pour le positionnement transversal de ces magasins (14) par rapport à la direction du chargement à manipuler, sinon doté dans l'autre occurrence au moins du moyen de son propre positionnement face aux rangées à manipuler, par rapport au véhicule support (13) et aux supports identiques voisins, chargés comme lui d'au moins un magasin (14).

14. Dispositif selon la revendication n°13, **caractérisé en ce que** le tracteur (13) porteur et positionneur des magasins (14) supportés par les supports de magasins (35), dispose de moyens propres de déplacement à au moins trois degrés de liberté suivant un plan horizontal pour se positionner face à la cargaison, aidé en cela par au moins un capteur de vision pointant des références fixes, notamment celles du véhicule détenteur ou destinataire de la cargaison, de manière à disposer les liens flexibles (1) dans la position requise par la cargaison, en complément des positionnements relatifs obtenus par les supports de magasins (35) et des magasins (14) eux-mêmes, placés sur le véhicule support (13), notamment en privilégiant, parmi les choix possibles des degrés de liberté, la translation horizontale dans la direction utilisée pour le chargement ou déchargement de la cargaison, la translation horizontale dans la direction perpendiculaire à celle utilisée pour le chargement ou déchargement de la cargaison et, pour l'orientation des liens (1) du véhicule dans la direction de chargement, la rotation d'axe vertical, perpendiculaire au plan horizontal de chargement.

15. Dispositif selon la revendication n°2 combinée à l'une quelconque des revendications précédentes, **caractérisé en ce que** le tracteur (13) porteur et positionneur des liens flexibles de manutention (1) comprend au moins un télémètre pointé horizontalement, dans la direction d'introduction des liens flexibles (1) et comporte sur ces liens flexibles (1), au moins sur un premier module d'extrémité (34), d'une part au bout de son extrémité (40), au moins un capteur de contact de proximité (41), détectant un obstacle frontal et, d'autre part, sur la première extrémité (40) et l'élément de structure portante d'extrémité (6) du dit module (34), au moins deux capteurs de détection de proximité (37), l'un pointant vers le coté, l'autre vers le sol et distants au plus de la longueur du premier module d'extrémité (34) et, pour les éléments suivants, d'une part sur les modules (2) de levage vertical et de déplacement du lien (1), au moins un capteur de détection de proximité (37) sur chaque pièce d'extrémité (6), à leurs extrémités et distants au plus de la longueur du module (2), et, d'autre part, au centre des maillons de liaison (3), un capteur (38) de détection de proximité, tous capteurs qui permettent à l'opérateur de détecter les bords ou les traverses de palettes, de calculer les écarts réels entre palettes pour régler les longueurs des dits éléments et de vérifier la non présence de palettes au dessus des maillons de liaison (3).

16. Dispositif selon l'une quelconque des revendications précédentes, combinées nécessairement avec les revendications n°2 et n°9, **caractérisé en ce qu'**un axe d'articulation (44) du moyen (36) de déplacement et d'appui au sol de l'élément porteur de levage (4), comporte une forme manoeuvrable en rotation par le coté de l'élément porteur de levage (4), adaptée aux outils courants, et présente par rapport à l'un au moins de ses paliers (39), une excentration lui permettant de guider et placer les éléments du moyen (36) de déplacement et d'appui au sol dans deux positions stables distantes en hauteur de la valeur double de l'excentration, dans le levage des liens flexibles (1), positions dont l'usage différencié dans chacun des deux liens (1) manipulant une même rangée, permet d'incliner légèrement la rangée soulevée, dans un levage différent de l'un de ses cotés de manière que les charges de celle-ci, placées sur un bord de la cargaison à charger, ne constituent pas d'obstacles au passage des parois verticales du véhicule, en étant recentrées, notamment dans leur partie haute, par cette inclinaison.
